(19) Europäisches Patentamt
European Patent Office
Office européen des brevets

(11) **EP 3 676 953 B1**

(12) **EUROPÄISCHE PATENTSCHRIFT**

(45) Veröffentlichungstag und Bekanntmachung des Hinweises auf die Patenterteilung:
**02.08.2023   Patentblatt 2023/31**

(21) Anmeldenummer: **18759628.3**

(22) Anmeldetag: **27.08.2018**

(51) Internationale Patentklassifikation (IPC):
**H02P 25/22** *(2006.01)*   **H02P 21/16** *(2016.01)*
**F03D 15/20** *(2016.01)*   **F03D 9/25** *(2016.01)*
**H02P 9/30** *(2006.01)*

(52) Gemeinsame Patentklassifikation (CPC):
**H02P 25/22; F03D 7/0272; H02P 9/30; H02P 21/16;**
F05B 2270/327; H02P 2101/15; Y02E 10/72

(86) Internationale Anmeldenummer:
**PCT/EP2018/072980**

(87) Internationale Veröffentlichungsnummer:
**WO 2019/042919 (07.03.2019 Gazette 2019/10)**

(54) **VERFAHREN ZUM STEUERN EINES MEHRPHASIGEN FREMDERREGTEN SYNCHRONGENERATORS EINER WINDENERGIEANLAGE UND WINDENERGIEANLAGE**

METHOD FOR CONTROLLING A MULTIPHASE SEPARATELY EXCITED SYNCHRONOUS GENERATOR IN A WIND TURBINE AND WIND ENERGY FACILITY

PROCÉDÉ SERVANT À COMMANDER UN GÉNÉRATEUR SYNCHRONE POLYPHASÉ À EXCITATION SÉPARÉE ET ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.08.2017   DE 102017119743**

(43) Veröffentlichungstag der Anmeldung:
**08.07.2020   Patentblatt 2020/28**

(73) Patentinhaber: **Wobben Properties GmbH
26607 Aurich (DE)**

(72) Erfinder:
• **ROSSO, Roberto
  26605 Aurich (DE)**
• **CASSOLI, Jair
  26603 Aurich (DE)**
• **ENGELKEN, Sönke
  28215 Bremen (DE)**
• **ELDEIB, Amgad
  26605 Aurich (DE)**

(74) Vertreter: **Eisenführ Speiser
Patentanwälte Rechtsanwälte PartGmbB
Postfach 10 60 78
28060 Bremen (DE)**

(56) Entgegenhaltungen:
DE-A1-102009 014 012     US-A1- 2013 182 466

• NGUYEN CHI D ET AL: "Self-tuning adaptive copper-losses minimization control of externally excited synchronous motors", 2014 INTERNATIONAL CONFERENCE ON ELECTRICAL MACHINES (ICEM), IEEE, 2. September 2014 (2014-09-02), Seiten 897-902, XP032687671, DOI: 10.1109/ICELMACH.2014.6960287 [gefunden am 2014-11-17]

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zum Steuern eines mehrphasigen fremderregten Synchrongenerators einer Windenergieanlage und die vorliegende Erfindung betrifft auch eine entsprechende Windenergieanlage.

Windenergieanlagen sind bekannt und sie wandeln Windenergie mittels eines aerodynamischen Rotors und einem damit gekoppelten elektrischen Generator in elektrische Energie um. Dabei gibt es unterschiedliche Generatorkonzepte. Heutzutage sind besonders doppeltgespeiste Asynchronmaschinen, Synchrongeneratoren mit konstanter Erregung, also mit Konstantmagneten, und fremderregte Synchrongeneratoren gebräuchlich. Die vorliegende Erfindung betrifft hierbei weder die genannten doppeltgespeisten Asynchrongeneratoren, noch die genannten permanenterregten Synchrongeneratoren, sondern die vorliegende Erfindung betrifft fremderregte Synchrongeneratoren.

Die Unterscheidung zu doppelt gespeisten Asynchronmaschinen ist vielfältig, so dass in Bezug auf den Generator und der Generatorsteuerung eine doppeltgespeiste Asynchronmaschine als gattungsfremd angesehen werden kann.

Der Unterschied zu permanenterregten Synchrongeneratoren besteht besonders darin, dass die gemäß vorliegender Erfindung betrachteten fremderregten Synchrongeneratoren auch über die Erregung gesteuert werden können. Insoweit ist auch unter fremderregten Synchrongeneratoren zu verstehen, dass der Läufer des Synchrongenerators über einen Erregerstrom bzw. eine Erregerspannung erregt wird. Entsprechend kann über die Einstellung des Erregerstroms bzw. der Erregerspannung auf den Betriebspunkt Einfluss genommen werden. Der Begriff Läufer wird hier besonders verwendet, um eine Verwechslung zum aerodynamischen Rotor der Windenergieanlage, also der Rotor, der Rotorblätter aufweist, die vom Wind bewegt werden, zu vermeiden.

Im Übrigen wird auch grundsätzlich noch zwischen getriebelosen und getriebebehafteten Windenergieanlagen unterschieden. Bei getriebelosen Windenergieanlagen, auf die sich die vorliegende Erfindung insbesondere bezieht, ist der Läufer des Generators direkt mit dem aerodynamischen Rotor mechanisch gekoppelt, so dass Läufer und aerodynamischer Rotor im Betrieb dieselbe Drehzahl aufweisen.

Einen fremderregten Synchrongenerator kann man besonders dadurch Steuern, dass zum einen der Erregerstrom bzw. die Erregerspannung eingestellt wird, und zum anderen durch das Steuern der Leistungsentnahme, bei der - vereinfacht ausgedrückt - die elektrische Belastung des Stators des Synchrongenerators gesteuert wird.

Solche Steuerungen erfolgen im Wesentlichen abhängig des Betriebspunktes der Windenergieanlage, was häufig auch bedeutet, dass dies abhängig der vorherrschenden Windgeschwindigkeit erfolgt. Es können aber auch andere Gründe vorliegen, um den Betriebspunkt zu ändern, wie bspw. eine entsprechende direkte oder indirekte Anforderung des Netzbetreibers des elektrischen Versorgungsnetzes, in das die Windenergieanlage einspeist. Auch sicherheits-oder umweltschutzrelevante Situationen oder Vorgaben können eine Veränderung des Betriebspunktes erforderlich machen.

Im Wesentlichen wird auch unterschieden zwischen einem Teillastbetrieb und einem Volllastbetrieb. Beim Teillastbetrieb wird, zumindest gemäß einigen Regelungskonzepten, eine Drehzahl und eine Leistung der Windenergieanlage in Abhängigkeit der vorherrschenden Windgeschwindigkeit eingestellt. Im Volllastbetrieb wird die Windenergieanlage hingegen auf Nennleistung und Nenndrehzahl begrenzt und damit jedenfalls insoweit in einem festen Betriebspunkt betrieben. Das Begrenzen auf Nenndrehzahl und Nennleistung wird dabei insbesondere durch Verstellen der Rotorblätter erreicht, nämlich dadurch, dass diese mit zunehmendem Wind aus dem Wind gedreht werden, so dass trotz steigendem Wind nicht mehr Leistung aus dem Wind entnommen wird.

Die Einstellung des Betriebspunktes im Teillastbetrieb erfolgt dabei üblicherweise so, dass für die Rotorblätter ein konstanter, als aerodynamisch optimal angenommener Blattwinkel eingestellt wird. Die Rotorblätter werden dann vom Wind angetrieben und es stellt sich eine Drehzahl ein. Abhängig von dieser Drehzahl wird eine Abgabeleistung der Windenergieanlage und damit im Ergebnis des Generators eingestellt. Wenn diese Generatorleistung der dem Wind entnommenen Leistung entspricht, stellt sich ein entsprechender stabiler Arbeitspunkt hinsichtlich Drehzahl und Leistung ein. Ansonsten verändert sich die Drehzahl und es wird entsprechend der neuen Drehzahl ein neuer Leistungswert eingestellt, bis ein stabiler Betriebspunkt gefunden ist.

Die Einstellung der Leistung am Generator kann ebenfalls anhand einer Kennlinie oder einer Tabelle, also einer sog. Lookup-Tabelle, erfolgen. Darin kann auch die einzustellende Erregerleistung, also der einzustellende Regelstrom bzw. die Erregerspannung, hinterlegt sein.

Insoweit kann die Windenergieanlage auch grundsätzlich zuverlässig und effizient gesteuert werden. Allerdings können sich die Kennlinien bzw. hinterlegten Tabellen als ungenau oder zumindest verbesserungsfähig erweisen, weil sie bspw. dynamische Vorgänge schlecht abbilden können. Auch temporäre Veränderungen, wie bspw. thermische Einflüsse, lassen sich in einer Tabelle schlecht abbilden bzw. bedürften einer weiteren Tabellenebene bzw. Tabellendimension. Ähnliches gilt auch für dauerhafte Abweichungen, die bzw. durch Alterungsvorgänge bedingt sein können. Auch Nichtlinearitäten können, zusammen mit anderen Einflussgrößen, wie bspw. die bereits genannte Temperatur, in der Tabelle schlecht abbildbar sein.

Durch die Verwendung von nicht optimalen Tabellen, auch wenn diese nur zeitweise nicht optimal sind, können Leistungseinbußen die Folge sein. Zumindest kann es dazu führen, dass die Windenergieanlage nicht leistungsoptimal arbeitet.

Abhilfe könnte eine ständige Neuberechnung der Tabelleneinträge schaffen, die aber recht aufwändig sind und auch besonders dann schwierig odergarunmöglich sein können, wenn notwendige Eingangsgrößen für eine solche Berechnung nicht bekannt sind, oder schwer zu ermitteln sind.

Das Deutsche Patent- und Markenamt hat in der Prioritätsanmeldung zur vorliegenden Anmeldung folgenden Stand der Technik recherchiert: DE 10 2010 043 492 A1, DE 11 2016 000 455 T5, EP 2 672 624 A1, DE 10 2011 006 670 A1 und DE 10 2016 106 590 A1.

Die Internationale Recherchenbehörde hat zusätzlich folgenden Stand der Technik recherchiert: DE 10 2009 014 012 A1, US 2013/182466 A1. Das Dokument DE 10 2009 014 012 A1 betrifft ein Verfahren zum Betreiben einer Windenergieanlage bei dem für einen kurzen Zeitraum die Leistung über die aktuelle Leistung der Windenergieanlage angehoben wird. Das Dokument US 2013/182466 A1 betrifft eine Erregungssteuerung für einen sechsphasigen, fremderregten Generator einer Windenergieanlage.

Die unten genannten Literaturstellen [a] und [b] beschreiben Lösungen für fremderregte Synchrongeneratoren.

[a] Chi D. Nguyen and W. Hoffman, "Self-Tuning Adaptive Copper-Losses Minimization Control of Externally Excited Synchronous Motors", International Conference on Electrical Machines (ICEM) 2014, pp. 897-902, 2-5 Sept. 2014.

[b] D. Kowal, P. Sergeant, L. Dupre' and H. Karmaker, "Comparison of Frequency and Time-Domain Iron and Magnet Loss Modeling Including PWM Harmonics in a PMSG for Wind Energy Application", IEEE Trans. on Energy Conversion, vol. 30, no.2, pp. 476-486, June 2015.

Der vorliegenden Erfindung liegt somit die Aufgabe zugrunde, zumindest eines der o.g. Probleme zu adressieren. Insbesondere soll eine Lösung vorgeschlagen werden, die das Steuern eines mehrphasigen fremderregten Synchrongenerators verbessert, insbesondere so, dass eine Leistungsausbeute wenigstens erhöht, möglichst optimiert wird. Zumindest soll zu bisher bekannten Lösungen eine Alternative vorgeschlagen werden.

Erfindungsgemäß werden somit ein Verfahren gemäß Anspruch 1 und eine Windenergieanlage nach Anspruch 14 vorgeschlagen.

Demnach wird ein Synchrongenerator einer Windenergieanlage gesteuert. Dieser ist mehrphasig und weist vorzugsweise nicht nur ein dreiphasiges System auf, sondern mehrere dreiphasigen Systeme. Entsprechend ist der Synchrongenerator auch ein vielpoliger Synchrongenerator, insbesondere ein langsamlaufender Ringgenerator einer getriebelosen Windenergieanlage.

Ferner ist der Synchrongenerator fremderregt, er erhält seine Erregung also durch Eingabe einer entsprechenden Erregerleistung von außen, nämlich durch einen Erregersteller. Der Synchrongenerator, der einen Stator und einen Läufer aufweist, hat somit am Läufer einen Erregereingang, um die Erregerleistung über einen Erregerstrom bzw. eine Erregerspannung einzugeben. Dazu ist an dem Erregereingang ein Erregersteller angeschlossen, der bspw. als Stromsteller ausgebildet sein kann und zur Erregung des Läufers einen entsprechenden Gleichstrom als Erregerstrom eingeben kann. Über den Erregersteller, also bspw. dem genannten Gleichstromsteller, kann auch die Amplitude der Erregerleistung eingestellt werden, indem der Erregerstrom durch den Gleichstromsteller entsprechend eingestellt wird, um bei diesem Beispiel zu bleiben.

Zum Abgeben der erzeugten Leistung weist der Stator einen Statorausgang auf, an dem Statorströme abgegeben werden. Die Mehrphasigkeit des Synchrongenerators bezieht sich dabei besonders auf die Statorströme. Ein Synchrongenerator mit zwei dreiphasigen Systemen, was hier als bevorzugte Variante vorgeschlagen wird, gibt somit sechs Statorströme unterschiedlicher Phasen ab bzw. gibt einen sechsphasigen Statorstrom ab.

An den Statorausgang ist ein Gleichrichter angeschlossen, um die Statorströme gleichzurichten und auf einen mit dem Gleichrichter verbundenen Gleichspannungszwischenkreis zu geben. Es werden also alle Phasen des Statorstroms, also bspw. sechs Phasen, um bei dem obigen Beispiel zu bleiben, gleichgerichtet und in dem Gleichspannungszwischenkreis bereitgestellt. Damit wird in dem Gleichspannungszwischenkreis die abzugebende Generatorleistung bereitgestellt. Von dem Gleichspannungszwischenkreis kann die so bereitgestellte Leistung bspw. durch einen Wechselrichter zum Einspeisen in ein elektrisches Versorgungsnetz wechselgerichtet werden und an die Bedürfnisse des elektrischen Versorgungsnetzes angepasst werden.

Außerdem ist der Gleichrichter steuerbar, um die Statorströme zu steuern. Die Aufgabe des Gleichrichters ist also nicht nur, die vom Generator abgegebene Leistung in dem Gleichspannungszwischenkreis bereitzustellen, sondern der Gleichrichter übernimmt durch die Steuerung der Statorströme auch eine Steuerung des Generators. Durch die Steuerung der Statorströme kann damit auch ein Betriebspunkt des Generators eingestellt bzw. beeinflusst werden.

Das hier vorgeschlagene und auch den weiteren Schritten zugrundegelegte System des Synchrongenerators ermöglicht somit zumindest über die Steuerung der Erregerleistung eine Steuerung des Generators, insbesondere seines Betriebspunktes, und die Steuerung der Statorströme ermöglicht eine weitere Steuerung des Generators, insbesondere seines Betriebspunktes. Der Betriebspunkt des Generators kann also wenigstens über diese beiden Eingriffsmöglichkeiten gesteuert werden.

Für dieses System werden nachfolgende Schritte zur Steuerung bzw. zur Vorbereitung der Steuerung vorgeschlagen.

Zunächst wird eine Drehzahl des Läufers erfasst. Diese kann gemessen werden oder es kann ein in der Steuerung ohnehin häufig vorhandener Wert der Drehzahl verwendet werden. Das Erfassen der Drehzahl und auch die weiteren noch beschriebenen Schritte werden im Grunde dauerhaft in einer wiederkehrenden Routine durchgeführt. Besonders Verfahrensschritte des Erfassens können auch gleichzeitig durchgeführt werden.

Weiterhin wird eine von dem Synchrongenerator bzw. der Windenergieanlage abzugebende Leistung bestimmt, die somit eine Sollleistung bildet. Dies erfolgt in Abhängigkeit der Drehzahl. Besonders kann hier eine Drehzahl-Leistungskennlinie zugrundeliegen, die einen Zusammenhang zwischen Drehzahl und Leistung vorgibt und entsprechend abhängig der Drehzahl ein zugehöriger Leistungswert aus der Drehzahl-Leistungskennlinie entnommen und als Sollleistung verwendet wird. Es kommt aber auch in Betracht, dass weitere Bedingungen berücksichtigt werden, wie bspw. externe Vorgaben, die bspw. eine Drehzahlreduzierung zur Geräuschminderung vorschreiben, oder aus anderen Naturschutzgründen, um nur zwei Beispiele zu nennen.

Vereinfacht ausgedrückt, wird der Erregerstrom, der nachfolgend auch immer stellvertretend für die Erregerspannung steht, so gewählt, dass die Sollleistung abgegeben werden kann. Vereinfacht ausgedrückt, wird bei einer Erhöhung der Sollleistung auch der Erregerstrom erhöht, so dass der Generator diese höhere Leistung abgeben kann. Das ist aber nur ein Beispiel zur Veranschaulichung, denn grundsätzlich kann bereits eine Drehzahlerhöhung bei gleicher Erregerleistung bzw. gleichem Erregerstrom auch zu einer erhöhten Abgabeleistung des Synchrongenerators führen.

Jedenfalls wird der so bestimmte Erregerstrom dann auch in der Steuerung des Generators verwendet, er wird also an dem Erregereingang des Läufers eingegeben. Die Umsetzung kann, wie bereits beschrieben, durch einen Stromsteller erfolgen.

Außerdem werden auch abzugebende Statorströme in Abhängigkeit der erfassten Drehzahl und der bestimmten Sollleistung bestimmt. Diese so bestimmten Statorströme bilden dann entsprechend Statorsollströme. Die abgegebene Leistung des Generators ergibt sich im Wesentlichen durch die Statorströme und die zugehörige Statorspannung am Statorausgang. Für die Gesamtbilanz des Generators ist dabei allerdings noch die Erregerleistung abzuziehen, die bspw. durch den genannten Stromsteller aufgebracht wird.

Weiterhin wird vorgeschlagen, dass der Gleichrichter so gesteuert wird, dass die bestimmten an dem Statorausgang abzugebenden Statorströme auf die Statorsollströme eingestellt werden. Die Größe der Statorströme ergibt sich einerseits durch den Synchrongenerator, nämlich insbesondere durch die eingestellte Erregerleistung und die Drehzahl des Läufers. Andererseits hängen die Statorströme auch von der Beschaltung ab, die hier im Wesentlichen durch den gesteuerten Gleichrichter gebildet wird. Grundsätzlich kann hier auch noch ein Filter in Betracht kommen, der am Statorausgang angeschlossen ist. Ein solcher Filter könnte allerdings auch durch den gesteuerten Gleichrichter realisiert werden.

Die Steuerung arbeitet also nun wie folgt. Es wird eine Drehzahl des Läufers erfasst und davon abhängig eine Sollleistung vorgegeben und dazu wird ein Erregerstrom eingestellt und es werden über den Gleichrichter die Statorströme gesteuert.

Es wird weiterhin vorgeschlagen, dass das Bestimmen des Erregerstroms bzw. der Erregerspannung und außerdem oder alternativ das Bestimmen der abzugebenden Statorströme, also das Bestimmen der Statorsollströme, mittels einer adaptiven Steuerungseinrichtung erfolgt. Der Erregerstrom bzw. die Erregerspannung und die abzugebenden Statorströme, also die Statorsollströme, bilden hierbei Steuergrößen der Steuerungseinrichtung. Es wird also zumindest eine adaptive Steuerung des Erregerstroms bzw. der Erregerspannung vorgeschlagen und außerdem oder alternativ eine adaptive Steuerung der Statorströme.

Dabei ist eine adaptive Steuerung, also eine Steuerung, die sich an etwas anpasst, eine solche, die sich an Parameter anpasst, nicht aber an Zustandsgrößen im regelungstechnischen Sinne.

Die erfasste Drehzahl des Läufers ist insoweit eine Zustandsgröße und auch die abzugebende Leistung, also die Sollleistung, ist ebenfalls eine Zustandsgröße.

Parameter, nämlich Systemparameter, sind Eigenschaften des Systems, also bspw. ein Innenwiderstand oder eine Induktivität des Generators.

Gemäß einer Ausführungsform wird vorgeschlagen, dass Parameter des Synchrongenerators mittels einer Schätzeinrichtung als Schätzgröße des Synchrongenerators geschätzt werden und die adaptive Steuerungseinrichtung zum Bestimmen ihrer Steuergrößen die Schätzgrößen berücksichtigt. Die adaptive Steuerungseinrichtung ist somit diejenige, die den Erregerstrom bzw. die Erregerspannung und außerdem oder alternativ die abzugebenden Statorströme als Steuergrößen steuert. Diese Steuerungseinrichtung berücksichtigt dann zum Bestimmen dieser Steuergrößen die Schätzgrößen. Insbesondere weist die Steuerungseinrichtung dazu wenigstens ein Steuergesetz auf, das im einfachsten Fall einen Verstärkungsfaktor und/oder wenigstens eine Zeitkonstante aufweisen kann. Ein solches Steuergesetzt kann unter Berücksichtigung der Schätzgrößen eingestellt bzw. verändert werden.

Unter einer Schätzung von Parametern wird hier somit insbesondere eine Parameteridentifikation verstanden, keine Zustandsschätzung.

Veranschaulicht ausgedrückt kann bspw. ein Zusammenhang über ein Kennfeld zwischen der erfassten Drehzahl und der bestimmten Sollleistung einerseits und dem Erregerstrom bzw. der Erregerspannung andererseits bestehen. Durch die Adaption kann dieses Kennfeld bspw. in Abhängigkeit einer Schätzgröße verändert werden, bspw. verschoben werden, um ein einfaches Beispiel zu nennen. Das ist dann ein Beispiel für eine Adaption der Steuerungseinrichtung.

Vorzugsweise werden eine oder mehrere Magnetisierungsinduktivitäten, ein Statorwiderstand und/oder ein Erregerwiderstand als Schätzgrößen des Synchrongenerators geschätzt und dann für die Adaption der adaptiven Steuerungseinrichtung verwendet. Die adaptive Steuerungseinrichtung ist dann also von der einen oder den mehreren geschätzten Magnetisierungsinduktivitäten und/oder dem geschätzten Statorwiderstand und/oder dem geschätzten Erregerwiderstand abhängig.

Hierbei wurde erkannt, dass besonders die drei genannten Größen, nämlich Magnetisierungsinduktivität, Statorwiderstand und Erregerwiderstand veränderlich sein können oder ungenau bekannt sein können und einen spürbaren Einfluss, jedenfalls in manchen Betriebspunkten, auf den Betriebspunkt bzw. die Auswahl oder das Einstellen des Betriebspunktes haben können. Zusätzlich wurde erkannt, dass eine unmittelbare oder direkte Messung eines oder mehrerer dieser Parameter des Synchrongenerators kaum möglich ist, zumindest mit Schwierigkeiten behaftet ist. Entsprechend wird ein Schätzverfahren vorgeschlagen. Vorzugsweise arbeitet das Schätzverfahren so, dass die Schätzung im normalen Betrieb erfolgen kann, also online erfolgen kann.

Grundsätzlich kann eine Parameterschätzung aufwendig sein und Rechenkapazität und/oder Rechenzeit beanspruchen. Es wurde aber erkannt, dass die Parameterschätzung mit einer signifikant niedrigeren Wiederholungsrate durchgeführt werden kann, als das tatsächliche Einstellen des Erregerstroms bzw. der Erregerspannung und der Statorströme. Für das Schätzen dieser Parameter kann also ein vergleichsweise langsamer Algorithmus vorgesehen sein und das hat zudem den Vorteil, dass auch eine entsprechend seltenere Übertragung der geschätzten Parameter durchgeführt werden kann, also eine Übertragung mit geringer Übertragungsrate. Dadurch können auch Übertragungskanäle entlastet werden, bzw. durch Einführung einer solchen Parameterschätzung braucht keine erhebliche Zusatzbelastung für diese Übertragungssysteme zu entstehen.

Ferner wurde erkannt, dass besonders die Magnetisierungsinduktivität Einfluss auf den Erregerstrom hat bzw. besonders auf Änderungen des Erregerstroms, bzw. dass ein Erregerstrom abhängig von der Magnetisierungsinduktivität eine unterschiedliche Erregerleistung im Läufer zur Folge hat. Dies kann nun berücksichtigt werden, indem sich die Steuerungseinrichtung adaptiv daran anpasst.

Auch ein Erregerwiderstand kann den Erregerstrom beeinflussen bzw. die Wirkung des Erregerstroms im Läufer verändern und diesem Problem kann durch die adaptive Steuerungseinrichtung begegnet werden.

Ein Statorwiderstand beeinflusst besonders die Statorströme bzw. den mehrphasigen Statorstrom. Dabei kann der Statorwiderstand besonders auch einen Blindleistungsanteil im Generator beeinflussen. Durch den Statorwiderstand ergibt sich ein Unterschied zwischen der Phasenlage zwischen Statorstrom und Statorspannung in den Statorwicklungen im Vergleich zu der Phasenlage zwischen Statorstrom und Ausgangsspannung am Statorausgang. Auch das kann nun durch die vorgeschlagene adaptive Steuerungseinrichtung berücksichtigt werden, wenn der Statorwiderstand geschätzt wird.

Gemäß einer Ausführungsform wird vorgeschlagen, dass die adaptive Steuerungseinrichtung zum Bestimmen ihrer Steuergrößen ein Model des Synchrongenerators berücksichtigt und das Model oder davon abgeleitete Zusammenhänge in Abhängigkeit geschätzter Größen des Synchrongenerators bzw. der Schätzgrößen des Synchrongenerators adaptiert.

Insbesondere wird ein solches Model in der Steuerungseinrichtung oder zugehörigen Berechnungsvorschriften zugrundegelegt oder hinterlegt. Anhand dieses Models können dann besonders die genannten Größen des Erregerstroms und der Statorströme so eingestellt werden, dass sich das gewünschte Verhalten des Generators einstellt, insbesondere dass sich die in Abhängigkeit der erfassten Drehzahl bestimmte Sollleistung einstellt. Dabei kann die Berücksichtigung des Models des Synchrongenerators auch helfen, einen optimalen Betriebspunkt einzustellen. Wird das Model des Synchrongenerators zugrundegelegt, kann auch die gewünschte Sollleistung bei möglichst geringen Verlusten gefunden werden. Mit anderen Worten können die involvierten Ströme, besonders die Statorströme, leistungsoptimal ausgewählt und eingestellt werden.

Durch die vorgeschlagene Adaption und dabei die in dieser Ausführungsform vorgeschlagene Adaption des Models basierend auf geschätzten Größen des Synchrongenerators, kann erreicht werden, dass dieses Model auch tatsächlichen Änderungen in dem Model berücksichtigter Größen des Synchrongenerators nachgeführt wird. Insbesondere wird dadurch vermieden, dass die Steuereinrichtung den Erregerstrom und/oder die Statorströme basierend auf einem falschen Model bestimmt bzw. vorgibt. Besonders kann die Verwendung eines Models problematisch sein, wenn sich dieses zu stark von dem tatsächlichen System unterscheidet, das es abbilden soll. Durch die vorgeschlagene Adaption basierend auf Schätzgrößen des Synchrongenerators wird dieses Problem vermieden, zumindest verringert.

Gemäß einer weiteren Ausgestaltung wird vorgeschlagen, dass die Windenergieanlage als getriebelose Windenergieanlage ausgebildet ist und außerdem oder alternativ der Synchrongenerator als Ringgenerator ausgebildet ist. Das Verfahren wird also auf eine solche spezielle Windenergieanlage angewendet. Bei der getriebelosen Windenergieanlage ist der Läufer des Generators unmittelbar mechanisch mit dem aerodynamischen Rotor der Windenergieanlage gekoppelt. Das bedeutet besonders, dass der Läufer sich nur sehr langsam dreht, nämlich mit der Drehzahl des aerodynamischen Rotors. Die Nenndrehzahl des aerodynamischen Rotors liegt etwa im Bereich von 5 bis 10 U/min. Zumindest wird hier vorzugsweise von solchen Windenergieanlagen ausgegangen. Das ist dann entsprechend bei Nennbetrieb auch die Drehzahl des Generators bzw. seines Läufers und im Teillastbetrieb liegt die Drehzahl darunter.

Das vorgeschlagene Verfahren betrifft somit gemäß dieser Ausführungsform einen langsam laufenden Generator. Besonders einen solchen Generator zu steuern kann sich signifikant davon unterscheiden, einen Standardgenerator zu steuern, der eine Nenndrehzahl von 1500 oder 3000 U/min aufweist. Häufig sind solche Generatoren einer getriebelosen Windenergieanlage auch bis zu einem gewissen Grade Unikate, weil sie jeweils konkret für eine Windenergieanlage gefertigt werden und diese Fertigung regelmäßig einen hohen manuellen Anteil aufweist.

Ähnliches gilt für einen vorgeschlagenen Ringgenerator, der sich insbesondere durch eine sehr hohe Polpaarzahl auszeichnet, die insbesondere wenigstens 48, insbesondere wenigstens 96 und insbesondere 192 beträgt. Ein Ringgenerator weist seine magnetisch wirksamen Bereiche nur in einem Ring im Bereich des Luftspalts auf. Insbesondere ist ein Ringgenerator dadurch gekennzeichnet, dass er in einem inneren Bereich um seine Drehachse von einem Durchmesser von 0 bis wenigstens 50 % seines Luftspaltdurchmessers kein magnetisch wirksames Material bzw. keine magnetisch wirksamen Bereiche aufweist. Mit anderen Worten sind in diesem inneren Bereich, falls überhaupt, Tragstrukturen oder ggf. Lüftungsunterstützungsstrukturen oder ähnliches vorhanden. Auch ein solcher Ringgenerator verhält sich ganz anders, als ein herkömmlicher Generator, der für eine Drehzahl von 1500 oder 3000 U/min ausgelegt ist.

Außerdem oder alternativ sind wenigstens zwei dreiphasige Systeme im Stator vorhanden. Es kommen aber auch bspw. vier dreiphasige Systeme in Betracht. Hierbei bildet jedes dreiphasige System im Wesentlichen ein eigenständiges Statorsystem, wobei ein gemeinsamer Rotor benutzt wird. Bei zwei dreiphasigen Systemen im Stator sind diese vorzugsweise um 30 Grad zueinander phasenverschoben. Damit kann eine gute Ausnutzung des Generators erreicht werden und insbesondere auch ein hoher Glättungsgrad bei der Gleichrichtung dieser sechs Phasen. Gleichwohl kann dies einen höheren Aufwand bei der modelabhängigen Berücksichtigung erforderlich machen.

Gleichwohl wurde erkannt, dass durch die vorgeschlagene adaptive Steuerungseinrichtung und besonders die Schätzung von Parametern eine hohe Qualität erreicht werden kann. Gleichzeitig kann durch ein solches wenigstens zweimal dreiphasiges Statorsystem auch erreicht werden, dass die einzelnen Statorströme, also die Phasen des gesamten Statorstroms, besonders kleine Stromwerte aufweisen können. Außerdem ist auch eine zumindest partielle Ausfallsicherheit gegeben. Zumindest kann bei Ausfall eines von zwei dreiphasigen Statorsystemen das verbleibende noch betrieben werden, wenn auch der Generator dann möglicherweise keine Nennleistung mehr liefern kann.

Besonders wird vorgeschlagen, dass das zugrundegelegte Model des Synchrongenerators wenigstens diese zwei dreiphasigen Systeme im Stator abbildet, also wenigstens zwei dreiphasige Statorsysteme abbildet.

Vorzugsweise wird wenigstens eine Induktivität des Synchrongenerators in einem Bereich einer Sättigung betrieben und wenigstens ein bedingt durch diese Sättigung geänderter Parameter von der Schätzeinrichtung erfasst. Eine Sättigung einer Induktivität bedeutet, dass sich die magnetische Flussdichte trotz weiterer Erhöhung der magnetischen Feldstärke nicht weiter erhöht oder zumindest nicht signifikant weiter erhöht. Das kann regelmäßig dazu führen, dass sich das betreffende Bauteil in seinem Verhalten einem ohmschen Widerstand annähert. Damit kann, auch wenn die Sättigung vergleichsweise schwierig geschätzt werden kann, eine solche Parameterveränderung durch die Schätzeinrichtung erfasst werden. Entsprechend kann als bevorzugte Umsetzung das verwendete Model entsprechend angepasst werden.

Vorzugsweise wird bewusst ein Betriebspunkt gewählt, bei dem die wenigstens eine Induktivität in einem Sättigungsbereich betrieben wird, um dadurch das Verhalten des Synchrongenerators entsprechend anzupassen. Besonders betrifft das Kopplungsinduktivitäten und kann dabei auch transformierte Induktivitäten betreffen. Die Sättigung kann sich physikalisch sowohl im Stator als auch im Rotor des Synchrongenerators einstellen. Dabei wird der Betriebspunkt besonders so gewählt, dass die Magnetisierungsinduktivitäten in einem Sättigungsbetrieb betrieben werden.

Gemäß einer Ausführungsform wird vorgeschlagen, dass die Schätzeinrichtung zum Schätzen von Parametern des Synchrongenerators wenigstens eine Statorspannung und außerdem oder alternativ wenigstens einen Statorstrom als Eingangsgröße zum Schätzen der Parameter berücksichtigt. Besonders aus der Statorspannung und/oder dem Statorstrom sind relevante Parameter des Synchrongenerators schätzbar. Insoweit wurde erkannt, dass über die Statorspannung und/oder den Statorstrom die relevanten Parameter geschätzt werden können.

Vorzugsweise werden alle drei Spannungen eines von mehreren dreiphasigen Statorsystemen zur Parameterschätzung verwendet. Außerdem oder alternativ werden alle drei Ströme eines bzw. desselben dreiphasigen Statorsystems zur Schätzung verwendet.

Hier wurde erkannt, dass ein dreiphasiges System des Stators, insbesondere unter Verwendung der entsprechende Statorspannungen bzw. Statorströme, zur Schätzung der relevanten Parameter des Synchrongenerators verwendet werden können, insbesondere ausreichend sind. Es wurde nämlich erkannt, dass dies auch dann ausreichend ist, wenn mehrere dreiphasige Statorsysteme vorhanden sind. Selbst wenn diese mehreren dreiphasigen Statorsysteme grundsätzlich voneinander unabhängig arbeiten, so sind sich ihre Parameter durch die bauliche Nähe doch ausreichend ähnlich. Ebenfalls wurde erkannt, dass auch die Verwendung eines von mehreren dreiphasigen Statorsystemen für die Schätzung ausreichen kann, wenn ein Parameter oder mehrere Parameter des Läufers geschätzt werden.

Unabhängig von dieser Erkenntnis kann vorzugsweise, besonders zu Redundanzwecken, aber nicht nur dafür, vorgeschlagen werden, mehrere der dreiphasigen Statorsysteme zur Schätzung zu verwenden, insbesondere alle dreiphasigen Statorsysteme, falls es mehr als zwei gibt. Auch hierfür werden dann jeweils die Statorspannungen und/oder Statorströme erfasst und zur Schätzung ausgewertet.

Gemäß einer Ausführungsform wird vorgeschlagen, dass die Schätzeinrichtung d/q-Komponenten von Magnetisierungsinduktivitäten des Synchrongenerators als Schätzgrößen schätzt. Ein dreiphasiges System kann in bekannter Weise mit einer sog. d/q-Transformation in d/q-Komponenten transformiert werden. Diese Komponenten geben dann das zugrundeliegende dreiphasige System mit zwei Komponenten, der d- und der q-Komponente, wieder, die auf ein drehendes System bezogen sind, das sich nämlich mit dem Läufer bzw. Rotor mitdreht. Solche Komponenten werden entsprechend auch von dem induktiven Verhalten des Synchrongenerators, besonders des Stators beeinflusst. Bei Betrachtung von d/q-Komponenten kann auch ein zugehöriges induktives Verhalten des Synchrongenerators in einen d-Anteil und einen q-Anteil aufgeteilt werden also auf die Drehung des Läufers bezogen werden. Diese Anteile werden auch als Magnetisierungsinduktivitäten des Generators $L_{md}$ und $L_{mq}$ bezeichnet. Dazu wird vorgeschlagen, dass diese beiden Magnetisierungsinduktivitäten, die somit d/q-Komponenten der Magnetisierungsinduktivität bilden, geschätzt werden. Vorzugsweise werden dann auch die so geschätzten d-q-Komponenten der Magnetisierungsinduktivität als Teil eines Models des Synchrongenerators verwendet. Details einer beispielhaften Berechnung werden unten noch anhand von Gleichungen erläutert und darin ist auch zu erkennen, dass zusätzlich ein Zusammenhang zwischen der Magnetisierungsinduktivität, nämlich ihrer d-Komponente und dem Erregerstrom besteht, weil die d/q-Transformation so aufgebaut ist, dass die d-Komponente des transformierten dreiphasigen Systems die magnetische Flussdichte der magnetischen Erregung abbildet. Der Erregerstrom kann insoweit auch als eine d-Komponente betrachtet werden, wobei diese Komponente im Grunde dem Erregerstrom entspricht, der ohnehin als Gleichstrom eingegeben wird. Ggf. ist noch eine Umrechnung von dem tatsächlich eingegebenen Erregerstrom zu dieser d-Komponente des Erregerstroms notwendig.

Es wird darauf hingewiesen, dass für die Bezeichnung des Rotors des Generators zur Vermeidung einer Verwechslung mit dem aerodynamischen Rotor der Windenergieanlage der Begriff Läufer verwendet wird. Die elektrotechnisch gebräuchliche Bezeichnung ist allerdings Rotor und daher wird auch hier gelegentlich im Zusammenhang mit dem Generator von Rotor gesprochen, was dann synonym zu dem Begriff Läufer zu verstehen ist. Insbesondere werden auf den Rotor bzw. Läufer bezogene Größen daher auch als Rotorgrößen bezeichnet, wie bspw. ein Rotorfeld, das ein auf den Rotor bezogenes Feld bezeichnet bzw. das Feld des Rotors bezeichnet. Auch einige Variablen verwenden daher den Begriff Rotor oder eine Abkürzung davon als Index.

Es wurde besonders erkannt, dass das Drehmoment des Synchrongenerators unmittelbar abhängt von den d-q-Komponenten des Statorstroms, den d-q-Komponenten der Magnetisierungsinduktivität und dem Erregerstrom bzw. dem auf den Stator transformierten Erregerstrom $i'_{fd}$. In Kenntnis dieses Zusammenhangs, der weiter unten auch noch in der Gleichung (1) spezifiziert wird, kann der Statorstrom bzw. können die Statorströme und der Erregerstrom so bestimmt werden, dass besonders Verluste minimiert werden. Es ist zu beachten, dass hier, was die noch folgende Gleichung (1) für zwei dreiphasige Statorsysteme spezifizieren wird, mehrere dreiphasige Statorströme berücksichtigt werden können, in dem jeder dreiphasige Statorstrom eine eigene d-Komponente und eine eigene q-Komponente aufweist. Entsprechend hängt das Drehmoment von allen d-Komponenten und q-Komponenten aller dreiphasigen Statorströme des Generators ab.

Gemäß einer weiteren Ausführungsform wird vorgeschlagen, dass die adaptive Steuereinrichtung die Statorsollströme in d/q-Koordinaten bestimmt und die Statorsollströme zum Steuern des Gleichrichters in eine dreiphasige Darstellung mit einem Stromwert pro Phase zurücktransformiert werden, um damit besser die bestimmten abzugebenden Statorströme auf die Statorsollströme einstellen zu können. Die Berechnung erfolgt also in d/q-Koordinaten, wohingegen dann zum Einstellen dieser Statorströme jeweils einzelne Phasenströme als Sollströme, also Phasensollströme, vorgegeben werden.

Vorzugsweise ist der Gleichspannungszwischenkreis mit einem Wechselrichter verbunden und der Wechselrichter wandelt Energie bzw. Leistung des Gleichspannungszwischenkreises in einen dreiphasigen Strom zum Einspeisen in ein elektrisches Versorgungsnetz um. Dadurch kann besonders erreicht werden, dass durch den gesteuerten Gleichrichter und die Steuerung des Erregerstroms der Synchrongenerator möglichst optimal betrieben wird, gleichzeitig kann eine davon unabhängige Einspeisung elektrischer Leistung bzw. elektrischer Energie in das elektrische Versorgungsnetz vorgenommen werden. Besonders kann der Wechselrichter auch Frequenz und Phase des dreiphasigen einzuspeisenden Stroms frei vorgeben, unabhängig davon, in was für einem Betriebspunkt der Generator jeweils betrieben wird. Letztlich gibt dann der Generator im Wesentlichen nur noch die einzuspeisende Leistung vor, denn es kann dauerhaft nur so viel Leistung eingespeist werden, wie der Generator erzeugt.

Gemäß einer weiteren Ausgestaltung wird vorgeschlagen, dass die Sollleistung in Abhängigkeit der erfassten Drehzahl und in Abhängigkeit einer erfassten Abgabeleistung des Generators bzw. der Windenergieanlage insgesamt bestimmt wird. Es wird also nicht nur die Drehzahl berücksichtigt, sondern auch die aktuelle Leistung.

Insbesondere erfolgt das so, dass aus der erfassten Drehzahl eine Zwischenleistung bestimmt wird. Diese Zwischenleistung könnte auch als theoretische Sollleistung bezeichnet werden. Aus dieser Zwischenleistung, die insoweit als Sollwert angesetzt wird, und der erfassten Abgabeleistung, die insoweit ein Ist-Wert bildet, wird über einen Soll-Ist-Wertvergleich eine Regelabweichung bestimmt. Diese Regelabweichung wird dann auf einen Regler gegeben, insbesondere auf einen PI-Regler, um dadurch die Sollleistung zu bestimmen. Insoweit ist diese zu bestimmende Sollleistung die einzustellende Leistung.

Hebt sich also bspw. die Drehzahl, was zu einer Erhöhung der Zwischenleistung führt, stellt sich zunächst eine Regelabweichung ein, die dann ausgeregelt wird, um es anschaulich zu erläutern. Durch diese Ausregelung, insbesondere unter Verwendung eines PI-Reglers, können Unterschiede zwischen der Leistung, die eingestellt sein sollte, und der tatsächlichen Leistung ausgeglichen werden. Außerdem kann über einen solchen Regler auch das dynamische Verhalten der Leistungsnachführung besser beeinflusst werden. Vorzugsweise wird ein solcher Regler, besonders der genannten PI-Regler, auf das dynamische Verhalten des Synchrongenerators abgestimmt, insbesondere auf eine Hochlaufzeitkonstante des Generators abgestimmt, also in Abhängigkeit dieser Hochlaufzeitkonstanten ausgewählt bzw. parametriert.

Insbesondere wird vorgeschlagen, dass die adaptive Steuerungseinrichtung so gesteuert wird, dass ein Wirkungsgrad des Generators maximiert wird. Bei Verwendung eines gesteuerten Gleichrichters, der zusammen mit einer adaptiven Steuerungseinrichtung verwendet wird, eröffnet sich die Möglichkeit, den Generator besser zu steuern, insbesondere auch Variationen des Generators zu berücksichtigen. Besonders die Statorströme können dann gezielt und möglichst genau gesteuert werden und es ist auch möglich, Erregerstrom und Statorströme insgesamt zu betrachten und eine optimale Gesamtkombination zu finden. Hierdurch kann besonders erreicht werden, dass die gewünschte Leistung, also die gewünschte Abgabeleistung des Generators bzw. der Windenergieanlage so eingestellt wird, dass die genannten Ströme dabei insgesamt, also kumuliert, die geringsten Verluste aufweisen. Das entspricht dann dem maximalen Wirkungsgrad des Generators für die in dem Moment gewünschte abzugebende Leistung.

Gemäß einer weiteren Ausgestaltung wird vorgeschlagen, dass zum Schätzen oder Bestimmen wenigstens einer Magnetisierungsinduktivität jeweils eine Induktivitätskennlinie verwendet wird. Dabei gibt die Induktivitätskennlinie Werte der jeweiligen Magnetisierungsinduktivität in Abhängigkeit eines Magnetisierungsstroms vor, wobei Werte der Induktivitätskennlinie ausgehend von einer Anfangskennlinie nach und nach im laufenden Verfahren mittels einer bzw. der Schätzung adaptiert werden.

Die Induktivitätskennlinie kann dabei auch als eine Lookup-Tabelle umgesetzt werden, in der die Werte der Magnetisierungsinduktivitäten gespeichert sind, wobei die Werte der Lookup-Tabelle ausgehend von Anfangswerten nach und nach im laufenden Verfahren mittels einer bzw. der Schätzung adaptiert; also verbessert werden.

In anderen Worten wird demnach vorgeschlagen, dass Anfangswerte für die Magnetisierungsinduktivität in der adaptiven Steuerung hinterlegt werden, zum Beispiel in Form der Induktivitätskennlinie und/oder der Lookup-Tabelle, und dass diese Anfangswerte mit geschätzten Werten laufend aktualisiert werden. Die geschätzten Werte können dabei mit einem Beobachter, mit einem Schätzalgorithmus oder über eine Berechnung bestimmt werden. Dem liegt die Erkenntnis zugrunde, dass sich die Magnetisierungsinduktivitäten im laufenden Betrieb ändern können. Besonders kann eine solche Änderung thermisch bedingt sein. Eine Anpassung der Magnetisierungsinduktivitäten ermöglicht es, dass genauere Werte für Magnetisierungsinduktivitäten zur Erzeugung der Statorströme berücksichtigt werden.

Vorzugsweise wird vorgeschlagen, dass zum Bestimmen der Statorsollströme ($I_e$, $I_{qs1}$, $I_{qs2}$, $I_{ds1}$, $I_{ds2}$) jeweils eine Statorsollstromkennlinie für jeweils einen der Statorsollströme verwendet wird. Die Statorsollstromkennlinie gibt dabei jeweils einen Zusammenhang zwischen der abzugebenden Sollleistung und dem jeweiligen zu bestimmenden Statorsollstrom an. Dabei wird jeweils einer der Statorsollströme in Abhängigkeit der abzugebenden Sollleistung gemäß der jeweiligen Statorsollstromkennlinie bestimmt.

Neben der Induktivitätskennlinie kann demnach eine weitere Kennlinie in der adaptiven Steuerung hinterlegt sein, nämlich die Statorsollstromkennlinie. Die Statorsollstromkennlinie dient der Funktion, die Statorsollströme ($I_e$, $I_{qs1}$, $I_{qs2}$, $I_{ds1}$, $I_{ds2}$) in Abhängigkeit der abzugebenden Sollleistung ($P_{vset}$) zu erzeugen. Dazu können mehrere Statorsollstromkennlinien jeweils für einen Statorsollstrom in der adaptiven Steuerung hinterlegt sein, die dann jeweils einen der Statorsollströme in Abhängigkeit der abzugebenden Sollleistung gemäß der jeweiligen Statorsollstromkennlinie erzeugt.

Zudem wird vorgeschlagen, dass wenigstens eine der Statorstromkennlinien, insbesondere jede der Statorstromkennlinien, in einer wiederkehrenden Routine an geänderte Bedingungen adaptiert wird. Dabei wird die wenigstens eine Statorstromkennlinie in Abhängigkeit einer, mehrerer oder aller Größen adaptiert, wie geschätzte Magnetisierungsinduktivitäten ($\hat{L}_{md}$, $\hat{L}_{mq}$), einen geschätzten Statorwiderstand ($\hat{R}_{stator}$) oder einen geschätzten Erregerwiderstand ($\hat{R}_{err}$). Die geänderten Bedingungen beziehen sich somit besonders auf die drei zuvor genannten Größen, die sich im laufenden Betrieb ändern können. Es wird also eine Änderung bzw. Adaption der hinterlegten Statorstromkennlinien vorgeschlagen, die an die geänderten Größen angepasst werden. Die genannten geschätzten Größen werden dabei von einer Schätzeinrichtung oder einem Beobachter empfangen, die diese bereitstellt. In Bezug auf die Induktivitätskennlinie können

die geschätzte Magnetisierungsinduktivitäten ($\hat{L}_{md}$, $\hat{L}_{mq}$) demnach auch die nach und nach im laufenden Verfahren adaptierten Werte der Induktivitätskennlinie sein.

Dabei wird die wiederkehrende Routine zur Adaption der Statorstromkennlinien seltener durchlaufen als jeweils einer der Statorsollströme in Abhängigkeit der abzugebenden Sollleistung gemäß der jeweiligen Statorsollstromkennlinie bestimmt wird. Beispielsweise wird die wiederkehrende Routine mit einer Frequenz in einem Bereich von 0,01 Hz bis 10Hz wiederholt, wohingegen die Statorsollströme mit einer Berechnungsfrequenz von 1kHz bis 16kHz berechnet werden können. Die wiederkehrende Routine bezieht sich somit auf den Vorgang der Aktualisierung der Statorsollstromkennlinien. Diese Routine wird langsamer ausgeführt, zum Beispiel im Minutenrhythmus, als das Bestimmen der Statorsollströme. Die Statorsollströme werden im Vergleich dazu mit einer für die Ansteuerung eines Umrichters notwendigen hohen Frequenz erzeugt, die beispielsweise im kHz-Bereich liegen kann.

Gemäß einer weiteren Ausgestaltung wird vorgeschlagen, dass die Statorsollströme ($I_e$, $I_{qs1}$, $I_{qs2}$, $I_{ds1}$, $I_{ds2}$) online in Abhängigkeit der Sollleistung ($P_{set}$) bestimmt werden, und zwar wenigstens in Abhängigkeit einer, mehrerer oder aller der folgenden Größen, nämlich der geschätzten Magnetisierungsinduktivitäten ($\hat{L}_{md}$, $\hat{L}_{mq}$), einem geschätzten Statorwiderstand ($\hat{R}_{stator}$) oder einem geschätzten Erregerwiderstand ($\hat{R}_{err}$). Statt die Statorsollströme über Kennlinien zu bestimmen, ist demnach eine weitere Alternative zu deren Bestimmung eine online Berechnung durchzuführen. Hierzu kann ein Berechnungsalgorithmus in der adaptiven Steuerung hinterlegt sein, der aus den zuvor ermittelten Schätzgrößen ($\hat{L}_{md}$, $\hat{L}_{mq}$, $\hat{R}_{stator}$, $\hat{R}_{err}$) die Statorsollströme ($I_e$, $I_{qs1}$, $I_{qs2}$, $I_{ds1}$, $I_{ds2}$) online berechnet. In einer besonderen Ausführungsform wird diese online Berechnung mit einer Frequenz von etwa 5Hz bis 100Hz durchgeführt.

Erfindungsgemäß wird auch eine Windenergieanlage vorgeschlagen, die einen mehrphasigen fremderregten Synchrongenerator aufweist, wobei

- der Synchrongenerator einen Stator und einen Läufer aufweist,
- der Läufer einen Erregereingang aufweist um einen Erregerstrom oder eine Erregerspannung einzugeben,
- an dem Erregereingang ein Erregersteller angeschlossen ist zum Eingeben des Erregerstroms bzw. der Erregerspannung,
- der Stator einen Statorausgang aufweist um Statorströme abzugeben,
- an den Ausgang des Stators ein Gleichrichter angeschlossen ist, um die Statorströme gleichzurichten und auf einen mit dem Gleichrichter verbundenen Gleichspannungszwischenkreis zu geben, und
- der Gleichrichter steuerbar ist, um die Statorströme zu steuern, wobei zum Steuern des Synchrongenerators
- eine Drehzahlerfassung zum Erfassen einer Drehzahl des Läufers oder aerodynamischen Rotors vorgesehen ist, und
- eine Steuerungseinrichtung vorgesehen ist und vorbereitet ist,

    - zum Bestimmen einer von dem Synchrongenerator oder der Windenergie abzugeben Sollleistung in Abhängigkeit der erfassten Drehzahl, und
    - zum Bestimmen eines Erregerstroms oder einer Erregerspannung in Abhängigkeit der erfassten Drehzahl und der bestimmten Sollleistung,

- der Erregersteller vorbereitet ist zum Eingeben des so bestimmten Erregerstroms bzw. der so bestimmten Erregerspannung an dem Erregereingang,
- die Steuerungseinrichtung vorbereitet ist

    - zum Bestimmen der abzugebenden Statorströme als Statorsollströme in Abhängigkeit der erfassten Drehzahl und der bestimmten Sollleistung und
    - zum Steuern des Gleichrichters, um die bestimmten an dem Statorausgang abzugebenden Statorströme auf die Statorsollströme einzustellen, wobei für wenigstens einen der Schritte

        - Bestimmen des Erregerstroms bzw. der Erregerspannung und
        - Bestimmen der abzugebenden Statorströme als Statorsollströme

    - die Steuerungseinrichtung als adaptive Steuerungseinrichtung vorgesehen ist, wobei die Steuerungseinrichtung so ausgestaltet ist, dass der Erregerstrom bzw. die Erregerspannung bzw. die abzugebenden Statorströme Steuergrößen der Steuerungseinrichtung bilden.

Somit wird eine Windenergieanlage vorgeschlagen, die insbesondere so arbeitet, wie vorstehend zum Verfahren zum Steuern eines mehrphasigen fremderregten Synchrongenerators ausgeführt wurde. Es liegt auch ein wie dazu erläuterter Synchrongenerator zugrunde.

Besonders ist eine Drehzahlerfassung vorgesehen, die allerdings nicht als zusätzliche Messeinheit ausgebildet sein muss, sondern die auch eine bereits anderweitig von der Windenergieanlage erfasste Drehzahl bspw. in einem Prozessrechner weiterverarbeiten und weitergeben kann.

Auch die Steuerungseinrichtung kann besonders hinsichtlich ihrer Stellglieder vorhandene Stellglieder verwenden. Sie kann als eigene körperliche Einheit vorgesehen sein, sie kann aber auch in einer vorhandenen Steuerungseinrichtung implementiert und/oder integriert sein. Besonders kann die Steuerungseinrichtung auf einem ohnehin vorhandenen Steuerungsrechner als entsprechender Programmcode hinterlegt und besonders in die übliche Steuerung der Windenergieanlage eingebettet sein.

Dass die Steuerungseinrichtung so ausgestaltet ist, dass der Erregerstrom bzw. die Erregerspannung und/oder die abzugebenden Statorströme Steuergrößen der Steuerungseinrichtung bilden, kann besonders bedeuten, dass die Steuerungseinrichtung entsprechende Steuerungsausgänge für diese einzelnen Steuergrößen aufweist. Sofern die Steuerungseinrichtung als körperlich eigener Gegenstand vorgesehen ist, können solche Ausgänge für die Steuergrößen bspw. als Anschlussklemmen vorgesehen sein, oder als Datenausgang für einen Datenbus oder andere Datenübertragungseinrichtung. Die Steuerungseinrichtung kann hierfür aber auch, wenn sie nicht körperlich eigenständig vorgesehen ist, die Steuergrößen in einem Steuerprogramm als entsprechende Programmvariablen ausgeben.

Vorzugsweise ist vorgesehen, dass die Windenergieanlage ein Verfahren zum Steuern des mehrphasigen fremderregten Synchrongenerators gemäß wenigstens einer vorstehend beschriebenen Ausführungsform eines solchen Verfahrens verwendet. Die entsprechend beschriebenen Vorteile können somit dieser Windenergieanlage zugutekommen und sie kann entsprechend verbessert, möglichst optimiert arbeiten.

Nachfolgend wird die Erfindung beispielhaft anhand von Ausführungsformen unter Bezugnahme auf die begleitenden Figuren näher erläutert.

Figur 1     zeigt eine Windenergieanlage in einer perspektivischen Darstellung.

Figur 2     zeigt Werte von d/q-Komponenten der Magnetisierungsinduktivität.

Figur 3a    zeigt schematisch einen Generator mit Anschlussstruktur.

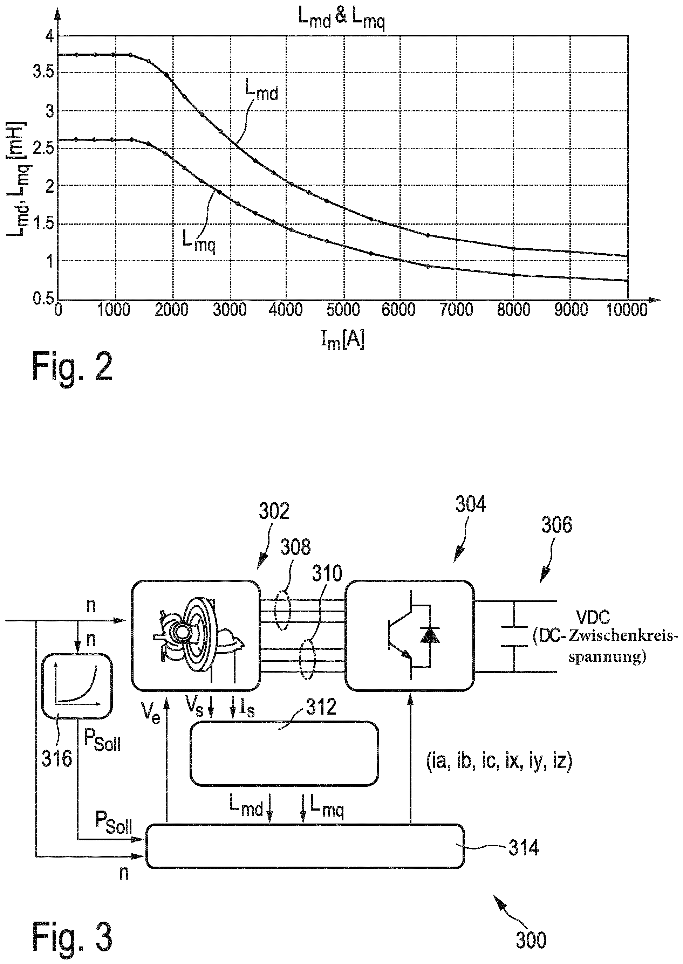

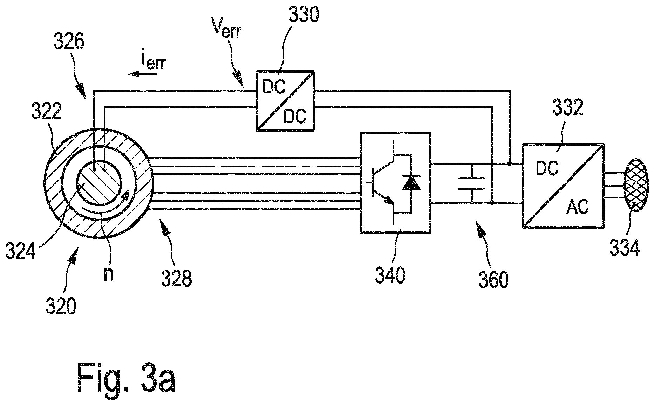

Figur 3     zeigt eine vorgeschlagene Reglerstruktur in einer schematischen Darstellung.

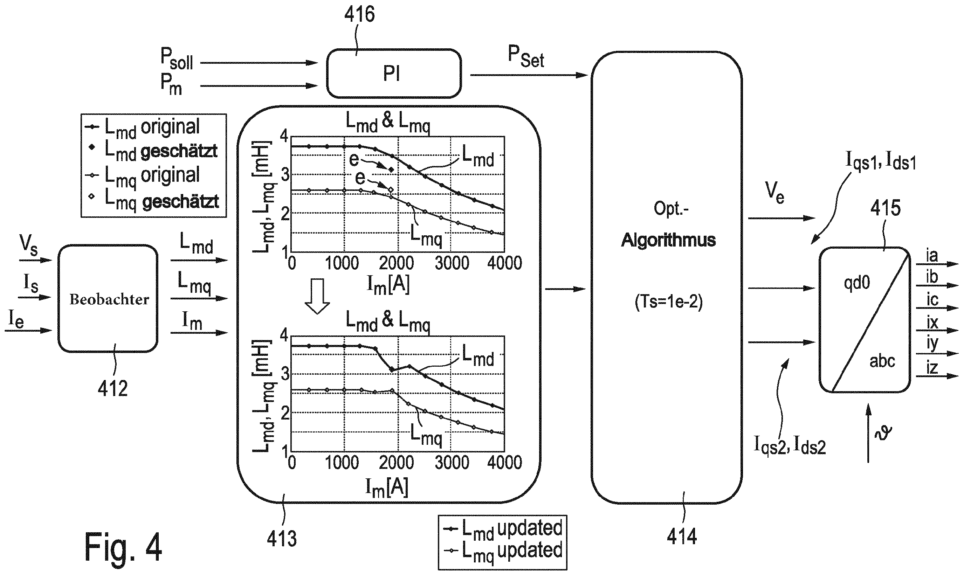

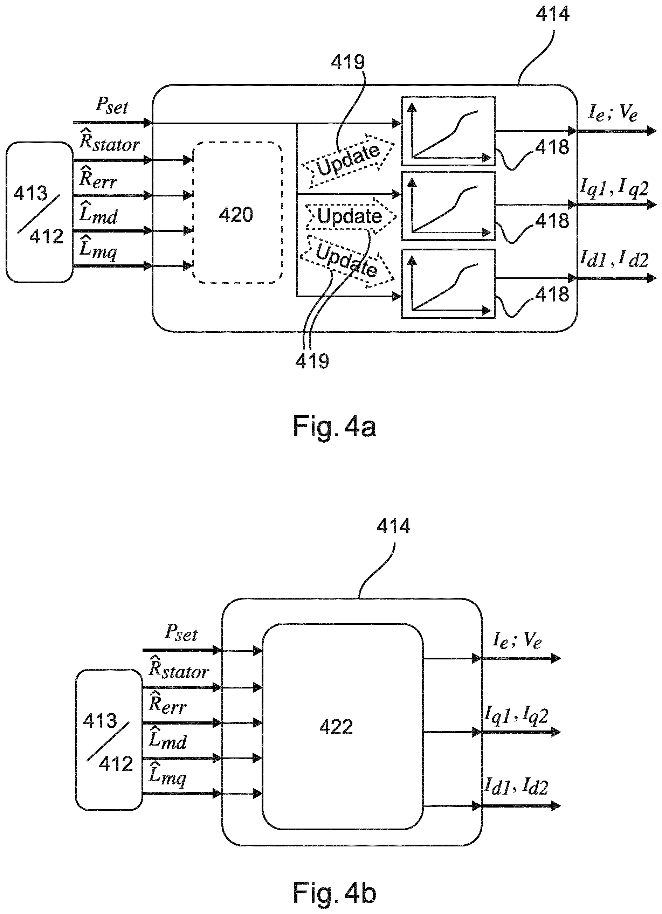

Figur 4     zeigt Details zur Reglerstruktur der Figur 3.

Figur 4a    zeigt in einer Ausführungsform Details zur Reglerstruktur der Figur 4.

Figur 4b    zeigt in einer alternativen Ausführungsform Details zur Reglerstruktur der Figur 4.

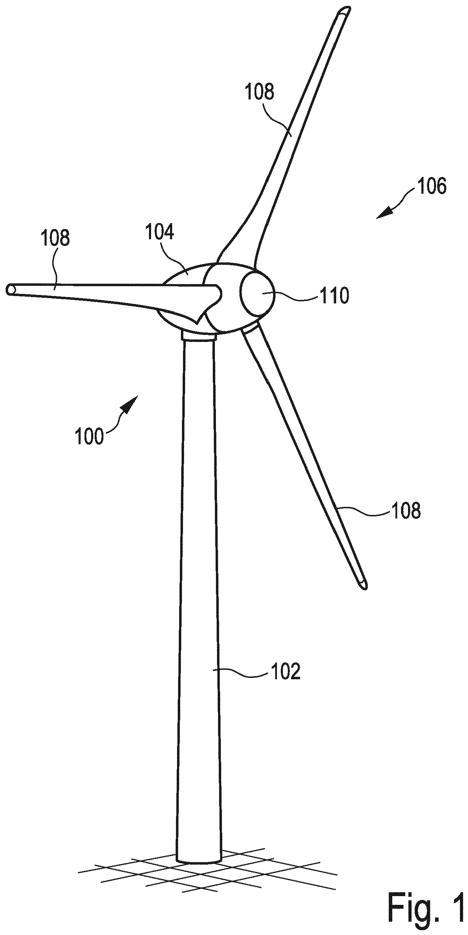

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Erfindung bezieht sich auf ein adaptives Regelverfahren eines aktiven Gleichrichters für einen fremderregten sechs-phasigen Synchrongenerator. Ein solches System wird als Teil einer Windenergieanlage gemäß Figur 1 vorgeschlagen. Die Erfindung ist jedoch auch für Synchrongeneratoren mit mehr Phasen, insbesondere solche mit durch Systemteilung vervielfachter Phasenzahl, anwendbar. Das vorgeschlagene Regelverfahren bietet die Möglichkeit einer online Parameteridentifikation und eine entsprechende Anpassung der Stromsollwerte des Generators. Dabei werden die Stromsollwerte so gewählt, dass der Wirkungsgrad des Generators an jedem Arbeitspunkt innerhalb der Betriebsbegrenzungen optimiert wird.

Im Folgenden wird das Verfahren weiter erläutert. Dafür werden Strom- und Spannungsvariablen überwiegend in einem rotorfeldorientierten d/q-Koordinatensystem angegeben. Die Umrechnung von statororientierten, vereinfachend sinusförmigen Zeitverläufen in das mit dem Rotorfeld rotierende dq-Koordinatensystem ist weithin bekannt und in der Literatur erläutert. Diese Umrechnung wird im Weiteren vorausgesetzt.

Das Drehmoment $T_e$ einer sechsphasigen Synchronmaschine ohne Dämpferwicklungen kann wie folgt beschrieben werden:

$$T_e = \frac{3}{2} P \left( L_{md}\left(-i_{d1s} - i_{d2s} + i'_{fd}\right)\left(i_{q1s} + i_{q2s}\right) - L_{mq}\left(-i_{q1s} - i_{q2s}\right)\left(i_{d1s} + i_{d2s}\right) \right) \qquad (1)$$

worin P die Polpaarzahl der Maschine, $i_{d1s}$ und $i_{q1s}$ die d und q- Komponenten der Statorströme des ersten Generatorsystems, und $i_{d2s}$ und $i_{q2s}$ die d und q- Komponenten der Statorströme des zweiten Generatorsystems bezeichnen. Unter dem ersten und zweiten Generatorsystem ist hier besonders das erste und zweite Statorsystem zu verstehen.

Weiterhin bezeichnet $i'_{fd}$ den Erregerstrom auf den Stator bezogen und ist wie folgt definiert:

$$i'_{fd} = \frac{2}{3} \frac{i_{fd}}{N} \qquad (2)$$

In Gleichung (2) bezeichnet N die Windungszahl der Maschine und $i_{fd}$ den untransformierten Erregerstrom, der auch als $i_e$ oder $i_{err}$ bezeichnet werden kann. $L_{md}$ und $L_{mq}$ der Gleichung (1) sind die Magnetisierungsinduktivitäten des Generators, die geschätzt werden müssen. Diese Induktivitäten sind sättigungsabhängig und können im Betrieb in Abhängigkeit des Magnetisierungsstroms $i_m$ stark von ihren Nennwerten abweichen. Eine erste Abschätzung von $L_{md}$ kann durch einen Leerlaufversuch durchgeführt werden, laut der folgenden Gleichung:

$$L_{md} = \sqrt{\frac{2}{3}} \frac{V_{oc}}{\omega_e \, i'_{fd}} \qquad (3)$$

wobei $V_{oc}$ die RMS Leiter- Leiter Leerlaufspannung und $\omega_e$ die elektrische Nennfrequenz der Maschine in rad s$^{-1}$ bezeichnet. Der Magnetisierungsstrom $i_m$ wird wie folgt definiert:

$$i_m = \sqrt{\left(\left(i_{q1s} + i_{q2s}\right)m\right)^2 + \left(-i_{d1s} - i_{d2s} + i'_{fd}\right)^2} \qquad (4)$$

mit $m = \sqrt{\frac{L_{mq}}{L_{md}}}$. Während des Leerlaufversuches fließt kein Strom im Stator, deshalb ist $i_m = i'_{fd}$. Durch analytische Berechnungen auf Basis der Generatorgeometrie oder durch Finite-Elemente-Simulationen kann man den Trend der Veränderung der d- und q-Komponente der Magnetisierungsinduktivität in Abhängigkeit von $i_m$ abschätzen. Das ist in Fig. 2 dargestellt.

Für einen bestimmten Generatorarbeitspunkt, definiert durch eine Drehzahl und einen Leistungssollwert, ist es dann möglich, eine optimale Kombination von Statorströmen $i_{d1}$, $i_{q1}$, $i_{d2}$ und $i_{q2}$ und Erregerstrom $i_{fd}$ zu finden, die die Statorverluste $P_{vstat}$ und Erregerverluste $P_{v\_rot}$ minimieren kann. Unter der Annahme, dass jede Phase den gleichen Widerstand $R_s$ hat und jedes der beiden Statorsysteme die gleichen q- und d-Stromsollwerte $I_{qs}$ und $I_{ds}$ bekommt, können die vorgenannten Verluste wie folgt berechnet werden:

$$P_{v\_stat} = 6 \, R_s \, I_{srms}^2 \qquad (5)$$

Darin ist $I_{srms}$ der RMS Phasenstrom und der ist wie folgt definiert:

$$I_{srms} = \frac{\sqrt{I_{qs}^2 + I_{ds}^2}}{\sqrt{2}} \qquad (6)$$

Die Erregerverluste werden durch die folgende Gleichung berechnet:

$$P_{v\_rot} = V_{err} \, I_{err} \qquad (7)$$

wobei $V_{err}$ den Erregerspannung und $I_{err}$ den Erregerstrom darstellen. Allerdings sind aufgrund der begrenzten DC-Zwischenkreisspannung, die auch vereinfachend nur als Zwischenkreisspannung bezeichnet werden kann, nicht alle verlustoptimalen Arbeitspunkte erreichbar. Das gilt besonders dann, wenn der Gleichrichter als hochsetzender Gleichrichter arbeitet und daher die DC-Zwischenkreisspannung immer um einen bestimmten Faktor über der effektiven Statorspannung liegen muss.

Ein weiterer begrenzender Faktor ist die maximale Stromtragfähigkeit der leistungselektronischen Elemente im Gleichrichter, insbesondere der Halbleiterschalter. Es wird daher vorgeschlagen, die folgenden Randbedingungen zu berücksichtigen:

$$I_{err} \leq I_{err\,MAX} \tag{8}$$

$$\sqrt{I_{qs}{}^2 + I_{ds}{}^2} \leq I_{s\,MAX} \tag{9}$$

$$V_s \leq \frac{V_{DCLink}}{\sqrt{3}} \quad \rightarrow \quad \sqrt{V_{qs}^2 + V_{ds}^2} \leq \frac{V_{DCLink}}{\sqrt{3}} \tag{10}$$

Darin sind

$$V_{qs} = \omega_r \lambda_{ds} - R_s I_{qs} \tag{11}$$

$$V_{ds} = -\omega_r \lambda_{qs} - R_s I_{ds} \tag{12}$$

und $\lambda_{ds}$ und $\lambda_{qs}$ sind wie folgt definiert:

$$\lambda_{ds} = L_{md}\left(-2\,I_{ds} + i'_{fd}\right) - L_{ls}I_{ds} \tag{13}$$

$$\lambda_{qs} = L_{mq}\left(-2\,I_{qs}\right) - L_{ls}I_{qs} \tag{14}$$

Darin ist wiederum $\omega_r$ die elektrische Drehzahl des Arbeitspunkts und $L_{ls}$ die Streuinduktivität des Stators. Durch einen iterativen Algorithmus werden alle mögliche Stator- und Erregerstromsollwerte berechnet, die die dargestellten Randbedingungen erfüllen. Es wird die Kombinationen gewählt, die die Summe der Verluste minimiert. Es können auch bekannte Gradientenverfahren, oder andere Verfahren zum Finden eines Maximums verwendet werden.
Es wurde erkannt, dass sich Generatorparameter so stark ändern können, dass eine Berücksichtigung solcher Veränderungen die Steuerung bzw. Regelung verbessern kann. Um daran möglichst gut angepasste Sollwerte zu berechnen, ist die Kenntnis der Generatorparameter $R_s$, $L_{ls}$, $L_{md}$ und $L_{mq}$ hilfreich. Der Statorwiderstand ist temperaturabhängig und kann empirisch mithilfe der folgenden Gleichung berechnet werden:

$$R_s(T) = R_{sT0}\left(1 + \alpha(T - T_0)\right) \tag{15}$$

wobei $R_{sT0}$ der ohmsche Statorwiderstand für eine bestimmte Temperatur $T_0$ ist, die bspw. 20°C betragen kann, und sich in Abhängigkeit der Temperaturvariation mit dem Faktor $\alpha$ ändert. Die Streuinduktivität $L_{ls}$ kann durch einen Kurzschlussversuch oder durch FEM Simulationen bestimmt werden.
Der Rotorwiderstand $R_e$ kann einfach aus den gemessenen Variablen $V_{err}$ und $I_{err}$ wie folgt berechnet werden:

$$R_e = \frac{V_{err}}{I_{err}} \tag{16}$$

Wenn der Generator sich im eingeschwungenen Zustand befindet, können die q- und d-Komponenten der Statorspannung durch Gleichungen (11) und (12) berechnet werden. Es wird daher die Berechnung im eingeschwungenen Zustand vorgeschlagen, weil im transienten Zustand die Ableitung der jeweiligen Flüsse in beiden Gleichungen zu berücksichtigen wären, was die Berechnung komplizierter macht. Unter der Annahme, dass $R_s$ und $L_{ls}$ bekannt sind, können $L_{md}$ und $L_{mq}$ durch die folgenden Gleichungen berechnet werden:

$$L_{mq} = \frac{v_{ds} + R_s\,i_{ds} - \omega_r L_{ls} i_{qs}}{2\,\omega_r\,i_{qs}} \tag{17}$$

$$L_{md} = \frac{v_{qs} + R_s\,i_{qs} + \omega_r L_{ls} i_{ds}}{\omega_r\left(-2\,i_{ds} + i_{fd}'\right)} \tag{18}$$

worin $v_{qs}$, $v_{ds}$, $i_{qs}$, $i_{ds}$ die Augenblickswerte der entsprechenden Statorspannungen und -ströme sind. Hierbei braucht nur eines der zwei Statorsysteme betrachtet zu werden, weil erkannt wurde, dass diese beiden Statorsysteme als identisch angenommen werden können. Die Ströme und Spannungen in Gleichungen (17) und (18) enthalten viele Oberschwingungen und deshalb wird vorgeschlagen, sie zu filtern. Die Schaltfrequenz des Umrichters ist vom Arbeitspunkt abhängig. Daher wird vorgeschlagen, einen zur Filterung möglichst ungünstigen Arbeitspunkt zugrunde zu legen, insbesondere ist ein ungünstiger Arbeitspunkt einer, bei dem eine niedrige Schaltfrequenz vorliegt und/oder eine hohe Oberschwingungsbelastung, die besonders bei einer hohen Sättigung angenommen wird, und darauf basierend die nötigen Filterzeitkonstanten abzustimmen.

Fig. 2 zeigt dabei die Magnetisierungsinduktivitäten $L_{md}$ und $L_{mq}$ in Abhängigkeit des Magnetisierungsstroms $I_m$. Die Werte der Magnetisierungsinduktivität $L_{md}$ liegen etwa 50% bis 100% über denen von $L_{mq}$. Besonders ist darauf hinzuweisen, dass die Werte der Magnetisierungsinduktivitäten mit steigendem Magnetisierungsstrom bereits früh absinken und auf Werte von etwa 30% ihrer Anfangswerte absinken. Das wird im Wesentlichen durch Sättigungseffekte hervorgerufen. Die gezeigten Verläufe können sich aber auch verändern, besonders durch Temperaturschwankungen.

Figur 3a zeigt schematisch einen Generator 320 mit Anschlussstruktur. Der Generator 320 weist einen Rotor bzw. Läufer 324 auf, der mit der Drehzahl n in dem Stator 322 rotiert. Der Stator 322 hat einen Statorausgang 328, über den Statorströme, hier nämlich zwei dreiphasige Statorströme, an einen aktiven Gleichrichter 340 gegeben werden. Der aktive Gleichrichter 340 steuert die Statorströme und erzeugt eine Gleichspannung am Gleichspannungszwischenkreis 360, an den ein Wechselrichter 332 angeschlossen ist, um einen dreiphasigen Strom in ein elektrisches Versorgungsnetz 334 einzuspeisen, was hier nur veranschaulichend angedeutet ist. An den Gleichspannungszwischenkreis 360 ist auch ein Erregersteller 330 angeschlossen, der eine Erregerspannung $V_{err}$ bzw. einen Erregerstrom $i_{err}$ erzeugt, zum Eingeben in den Läufer 324 an einem Erregereingang 326. Dieser Aufbau liegt auch der Figur 3 zugrunde und der Generator 320 entspricht im Grunde dem Generator 302 der Figur 3. Auch der aktive Gleichrichter 340 der Figur 3a entspricht im Grunde dem aktiven Gleichrichter 304 der Figur 3.

In Figur 3 ist ein Überblick einer vorgeschlagenen Regelungsstruktur 300 dargestellt. Die Eingangssignale für den Algorithmus sind die Drehzahl n und der Leistungssollwert $P_{Soll}$, der über die Leistungskennlinie des Generators von der Drehzahl abhängt. Ein Beobachter, der auch als Observer bezeichnet werden kann, bekommt als Eingangswerte die Statorspannungen und -ströme und berechnet nach Gleichungen (17) und (18) die d- und q-Komponenten der Magnetisierungsinduktivität.

Die Regelungsstruktur 300 der Figur 3 geht von einem Generator 302 und einem aktiven Gleichrichter 304 aus, der auf einen Gleichspannungszwischenkreis 306 gleichrichtet. Der Generator 302 weist zwei dreiphasige Statorsysteme auf und gibt daher über zwei dreiphasige Ausgangsleitungen 308 bzw. 310 seinen Statorstrom als zweimal dreiphasigen Statorstrom an den aktiven Gleichrichter 304 ab.

Einen Bestandteil der Regelung bildet die Schätzeinrichtung 312, die auch als Beobachter oder Observer bezeichnet werden kann, hier aber Parameter schätzt, nämlich die beiden Magnetisierungsinduktivitäten $L_{md}$ und $L_{mq}$. Die Eingangsgrößen für die Schätzeinrichtung 312 sind dazu die Statorspannung Vs und der Statorstrom Is. Die Werte erhält die Schätzeinrichtung 312 vom Generator 302. Dazu kommt auch in Betracht, dass diese Größen bereits anderweitig erfasst wurden und beispielsweise in einem Steuerrechner vorhanden sind und die Schätzeinrichtung 312 dort auf diese Größen zurückgreifen kann. Die Schätzeinrichtung 312 muss also nicht unbedingt eigene Messmittel am Generator 302 vorsehen.

Das Ergebnis der Schätzeinrichtung 312 sind die beiden Magnetisierungsinduktivitäten $L_{md}$ und $L_{mq}$ bzw. das kann auch bezeichnet werden als die d- und q-Komponenten der Magnetisierungsinduktivität. Diese beiden Größen werden in den adaptiven Regler 314 eingegeben.

Der adaptive Regler 314 erhält außerdem als Eingangsgrößen die aktuelle Drehzahl n und den aktuellen Leistungssollwert $P_{soll}$. Der aktuelle Leistungssollwert $P_{soll}$ ergibt sich aus einer Drehzahlleistungskennlinie, die in dem Drehzahlleistungskennlinienblock, der vereinfachend als n-P-Block 316 bezeichnet wird, hinterlegt ist. Die Drehzahl n beschreibt die Drehzahl des aerodynamischen Rotors, denn auf die Aerodynamik ist die im n-P-Block 316 hinterlegte Drehzahlleistungskennlinie abgestimmt. Diese Drehzahl n wirkt somit auch maßgeblich auf den Generator 302 und ist somit als Eingangsvariable für den Generator 302 eingezeichnet. Bei einer getriebelosen Windenergieanlage, die hier vorgeschlagen wird, entspricht die Drehzahl n des aerodynamischen Rotors der Drehzahl des Generators, also der Läuferdrehzahl.

Der adaptive Regler 314 berechnet nun aus der aktuellen Drehzahl n und der aktuell vorgegebenen Sollleistung $P_{soll}$ eine Erregerspannung $V_e$, die ein Erregersteller bereitstellen soll, um für eine Erregerleistung in dem Generator 302 zu sorgen, der als fremderregter Generator ausgeführt ist. Außerdem berechnet der adaptive Regler 314 Sollwerte für den Statorstrom bzw. Sollwerte für die einzelnen Phasenströme des zweimal dreiphasigen Statorstroms. Es werden nämlich die Sollwerte für die drei Phasenströme $i_a$, $i_b$ und $i_c$ für den ersten dreiphasigen Statorstrom und die Werte $i_x$, $i_y$ und $i_z$ des zweiten dreiphasigen Statorstroms berechnet bzw. vorgegeben. Die Umsetzung dieser Sollwerte für den Statorstrom bzw. seiner Komponenten erfolgt dann durch den aktiven Gleichrichter 304.

Bei dieser Berechnung bzw. Vorgabe berücksichtigt der adaptive Regler 314 Veränderungen der Magnetisierungsinduktivität, indem er die entsprechenden d- und q-Komponenten berücksichtigt, die er von der Schätzeinrichtung 312 erhält.

Somit können die Werte für den Statorstrom bzw. seine Komponenten und die Erregerleistung bzw. dafür die Erregerspannung durch den adaptiven Regler 314 optimal aufeinander abgestimmt werden. Zusätzlich können dabei Veränderungen der Eigenschaften des Generators 302 berücksichtigt werden.

Figur 4 zeigt zum adaptiven Regler der Figur 3 weitere Details bzw. Variationen. Dabei ist ein Beobachterblock 412 dargestellt, der zusammen mit einem Adaptionsblock 413 etwa der Schätzeinrichtung 312 der Figur 3 gleichgesetzt werden kann. Der Beobachterblock 412 erhält die Statorspannung $V_s$, den Statorstrom $I_s$ und den Erregerstrom $I_e$ als Eingangsgrößen und beobachtet daraus die beiden Komponenten $L_{md}$ und $L_{mq}$ der Magnetisierungsinduktivität und den Magnetisierungsstrom $I_m$, die er an den Adaptionsblock 413 weitergibt. Der Adaptionsblock 413, der aber auch Teil eines adaptiven Reglers im Sinne des adaptiven Reglers 314 der Figur 3 sein könnte, adaptiert dann, zumindest u.a., die Werte der Magnetisierungsinduktivität. Der Adaptionsblock 413 veranschaulicht symbolhaft eine Veränderung der Verläufe der beiden Komponenten $L_{md}$ und $L_{mq}$ der Magnetisierungsinduktivität. Der obere symbolische Block entspricht dem Diagramm der Figur 2, allerdings nur bis zu einem Magnetisierungsstrom von 4000A. Von diesem oberen Zusammenhang geht dieser Adaptionsblock 413 somit zunächst aus und schätzt dann dazu zu dem aktuellen Betriebspunkt, der durch den aktuellen Magnetisierungsstrom $I_m$ gekennzeichnet ist, jeweils einen neuen Wert für die beiden Komponenten $L_{md}$ und $L_{mq}$. Das ist in dem Adaptionsblock 413 in der oberen Darstellung durch die beiden Pfeile e angedeutet, die auf die beiden neu geschätzten Werte für $L_{md}$ und $L_{mq}$ zeigen.

Entsprechend wird, was das untere Diagramm in dem Adaptionsblock 413 andeutet, die Kennlinie der beiden Komponenten $L_{md}$ und $L_{mq}$ der Magnetisierungsinduktivität verändert. Entsprechend enthalten diese beiden Kennlinien einen Knick, optimalerweise können aber nach und nach auch weitere Werte der Kennlinien angepasst werden und zu einer gesamten Veränderung der Kennlinien führen.

Das Ergebnis wird dann in den Optimierungsblock 414 gegeben, der dann davon abhängig Sollwerte erzeugen kann. Die von dem Adaptionsblock 413 in den Optimierungsblock 414 übergebenen Parameter sind nicht im Detail in Figur 4 gezeigt, es werden aber jedenfalls die aktuellen Werte der Komponenten $L_{md}$ und $L_{mq}$ der Magnetisierungsinduktivität übergeben. Es können dort aber auch vollständig veränderte Kennlinien der Verläufe der Komponenten $L_{md}$ und $L_{mq}$ der Magnetisierungsinduktivität übergeben werden. Andererseits ist auch hier die Blockdarstellung der Figur 4 symbolhaft zu verstehen und sämtliche Blöcke können in einem einzigen Prozessrechner realisiert sein und dann greift beispielsweise der Optimierungsblock 414 bzw. der dadurch symbolisierte Optimierungsalgorithmus auf die Werte zu, die er benötigt. Als Zykluszeit wurden 0,01s gewählt (Ts=1e-2).

Der Optimierungsblock 414 erhält weiterhin einen Leistungssollwert $P_{set}$, der den aktuell einzustellenden Leistungswert bezeichnet, nämlich für die vom Generator oder der Windenergieanlage abzugebende Abgabeleistung.

Dieser konkret einzustellende Leistungssollwert $P_{set}$ ist das Ergebnis einer Leistungssollwertregelung 416, die hier als PI-Regler ausgebildet ist. Dieser PI-Regler 416 erhält eine gewünschte Abgabeleistung $P_{soll}$ und einen Ist-Wert der aktuellen Abgabeleistung $P_m$, der insoweit auch eine gemessene Leistung bezeichnet. Wird nun der Leistungssollwert verändert, wird also $P_{soll}$ verändert, ist nicht gewünscht, dass eine entsprechend möglicherweise sprungartige Veränderung auch so in den Optimierungsblock gegeben wird. Entsprechend ist diese P-Sollwertregelung 416 vorgesehen, die den tatsächlich aktuell einzustellenden Leistungswert $P_{set}$ mit einer Dynamik dem vorgegebenen Leistungssollwert $P_{soll}$ nachführt.

Der Optimierungsblock 414 berechnet dann basierend auf den genannten Eingaben Statorströme und eine Erregerspannung. Die Erregerspannung kann direkt als einzustellende Erregerspannung $V_e$ ausgegeben werden. Die einzustellenden Statorströme werden zunächst für jedes Statorteilsystem in d/q-Komponenten ausgegeben. Entsprechend werden die Werte $I_{qs1}$, $I_{ds1}$, $I_{qs2}$, $I_{ds2}$ ausgegeben. Sie werden allerdings zunächst auf den Transformationsblock 415 gegeben, der diese d/q-Komponenten in a, b, c -Komponenten transformiert. Es ergeben sich dann bei den betrachteten zweimal dreiphasigen Statorsystemen sechs einzelne Augenblickswerte, nämlich ia, ib, ic, ix, iy und iz. Diese sechs Stromwerte können dann, wie in Figur 3 angedeutet, als Augenblickssollwerte an den aktiven Gleichrichter (304 in Figur 3) gegeben werden. Im Übrigen benötigt der Transformationsblock 415 zur Durchführung der Transformation den aktuellen Rotorwinkel $\theta$, nämlich des Rotors des Generators, also des Läufers.

In Figur 4 ist somit der adaptive Regler 314 der Figur 3, mit weiteren Details dargestellt. Ein Optimierungsalgorithmus 414 berechnet den Erregerstromsollwert $I_{err}$ bzw. die entsprechende Erregerspannung $V_{err}$, was in der Figur 4 als $V_e$ bezeichnet ist, und die Statorstromsollwerte $I_{qs}$ und $I_{ds}$. Unter der Annahme von Symmetrie zwischen den beiden Statorsystemen sind die Stromsollwerte für beide Systeme identisch.

Die sechs Statorströme des sechsphasigen Generators werden in Abhängigkeit der gewünschten Leistung $P_{set}$ und damit der Erregerspannung $V_e$ eingestellt. Dazu ist es hilfreich, die Magnetisierungsinduktivitäten $L_{md}$ und $L_{mq}$

zu kennen. Die Zusammenhänge in d/q-Komponenten sind besonders in der Gleichung (1) und den ergänzenden Erläuterungen und Gleichungen gegeben. Basierend auf der Gleichung (1) kann bspw. eine rekursive Lösung gefunden werden.

Es wurde aber erkannt, dass die Magnetisierungsinduktivitäten nicht konstant sind, sondern von dem aktuellen Betriebspunkt des Generators abhängen können. Besonders hängen sie vom Magnetisierungsstrom ab, wie in Figur 2 und in der oberen Hälfte des Blocks 413 in Figur 4 gezeigt ist. Darüber hinaus wurde aber auch erkannt, dass die Magnetisierungsinduktivitäten zusätzlich von weiteren Größen abhängen können, insbesondere können sie temperaturabhängig sein. Das bedeutet besonders, dass die in Figur 2 gezeigten Kennlinien veränderlich sind. Es wird vorgeschlagen, das zu berücksichtigen.

Der Optimierungsblock 414 berücksichtigt, dass die Magnetisierungsinduktivitäten $L_{md}$ und $L_{mq}$ veränderlich sind, indem er die jeweils aktuellen Werte verwendet. Dazu kann er bspw. jeweils zum aktuellen Arbeitspunkt eine rekursive Lösung basierend auf der Gleichung (1) finden und davon abhängig die Statorströme $I_{qs1}$, $I_{ds1}$, $I_{qs2}$ und $I_{ds2}$ in d/q-Koordinaten bestimmen. Es kommt natürlich auch in Betracht, solche rekursiven Lösungen oder andere Lösungen vorab zu bestimmen und in einer Tabelle zu hinterlegen, aus der sie dann im Betrieb abgerufen werden. Zwischenwerte können interpoliert werden.

Der Optimierungsblock 414 gibt somit die Statorströme vor, die eingestellt werden, und adaptiert dafür wenigstens die verwendeten Magnetisierungsinduktivitäten. Die Magnetisierungsinduktivitäten sind dabei Parameter und insoweit ist der Optimierungsblock 414 eine adaptive Steuerung bzw. ein Teil einer adaptiven Steuerung.

Dazu erhält der Optimierungsblock 414 diese Magnetisierungsinduktivitäten vom Adaptionsblock 413. Dabei soll der Adaptionsblock 413 besonders veranschaulichen, dass die Magnetisierungsinduktivitäten einer Veränderung unterworfen sind und diese Veränderung wird auch berücksichtigt. Insoweit können auch der Adaptionsblock 413 zusammen mit dem Optimierungsblock 414 als adaptive Steuerung verstanden werden.

Tatsächlich dient der Adaptionsblock 413 besonders der Veranschaulichung der angenommenen Veränderung. Dabei wird zunächst, nämlich gemäß dem oberen Diagramm des Adaptionsblocks 413, von einem ursprünglich als Originalverlauf hinterlegten Zusammenhang zwischen dem Magnetisierungsstrom $I_m$ und den Magnetisierungsinduktivitäten ausgegangen.

Es wurde aber erkannt, dass es dazu Abweichungen geben kann. Um das besser zu berücksichtigen, können dann zum jeweiligen Magnetisierungsstrom $I_m$, Magnetisierungsinduktivitäten durch einen Beobachter beobachtet werden, was auch als Schätzung bezeichnet werden kann. Der Beobachter ist als Beobachterblock 412 dargestellt. Er kann den Erregerstrom $I_e$, die Statorspannung Vs und den Statorstrom Is als Eingangsgrößen erhalten und die Magnetisierungsinduktivitäten $L_{md}$ und $L_{mq}$ sowie den Magnetisierungsstrom $I_m$ beobachten bzw. abschätzen und ausgeben.

Dem Grund nach hat der Beobachterblock 412 also die Funktion, die Magnetisierungsinduktivitäten $L_{md}$ und $L_{mq}$ sowie den Magnetisierungsstrom $I_m$ aus den genannten Eingangsgrößen zu bestimmen.

Dies kann mit einem klassischen Beobachter erfolgen dem eine Systembeschreibung zu Grunde liegt, wie sie besonders durch die Gleichungen (4), (17) und (18) gegeben ist. Alternativ kann der Beobachterlock 412 durch einen Schätzalgorithmus oder durch eine Berechnung die Magnetisierungsinduktivitäten $L_{md}$, $L_{mq}$ sowie den Magnetisierungsstrom $I_m$ bestimmen. Auch das kann basierend auf den Gleichungen (4), (17) und (18) erfolgen. Die Gleichungen (4), (17) und (18) betreffen auch aktuelle Messwerte, sodass darüber tatsächliche Einflüsse, besonders thermisch bedingte Einflüsse, in die Bestimmung eingehen.

Durch die Anwendung der Gleichungen können somit temperaturbedingte Änderungen erkannt und berücksichtigt werden. Die Kennlinie gemäß Figur 2 kann somit entsprechend verbessert werden.

Die so beobachteten Werte für $L_{md}$, $L_{mq}$ und $I_m$ werden anschließend in den Adaptionsblock 413 eingegeben, nachdem sie von dem Beobachterblock 413 für einen Arbeitspunkt bestimmt wurden.

Das ist in dem Adaptionsblock 413, im oberen Diagramm durch die beiden Pfeile "e" angedeutet. Der Pfeil "e" veranschaulicht somit zwei durch den Beobachterblock bestimmte Werte für $L_{md}$ und $L_{mq}$ in einem bestimmten Arbeitspunkt im oberen Diagramm des Adaptionsblocks 413. Diese arbeitspunktabhängigen Werte für $L_{md}$ und $L_{mq}$ werden in das untere Diagramm des Adaptionsblocks 413 übertragen und führen zu den beiden gezeigten Knicken. Es werden also in dem Adaptionsblock 413 für die Magnetisierungsinduktivitäten Anfangswerte hinterlegt, zum Beispiel in Form einer Kennlinie oder einer Lookup-Tabelle, die dann mit den aktuellen Werten aus dem Beobachterlock 413 laufend aktualisiert werden. Die aktualisierten bzw. adaptierten Werte für $L_{md}$, $L_{mq}$ und $I_m$ werden anschließend an den Optimierungsblock 414 übergeben, der die aktualisierten Werte zur Bestimmung der Statorströme berücksichtigt.

Insoweit veranschaulicht der Adaptionsblock 413, besonders im Vergleich zu Figur 2, wie die Bestimmung der Magnetisierungsinduktivitäten durch den eingesetzten Beobachterblock 412 erfolgt und wie die sich im Betrieb ändernden Magnetisierungsinduktivitäten bestimmt werden, um diese anschließend in dem Optimierungsblock 414 zur Berechnung der Statorströme berücksichtigen zu können.

Die Figuren 4a und 4b zeigen jeweils Ausführungsformen bzw. Details zur Reglerstruktur der Figur 4, nämlich besonders, wie eine Bestimmung der Statorsollströme in dem Block 414 umgesetzt wird.

Hierzu zeigt Figur 4a die Bestimmung der Statorsollströme mittels Kennlinienberechnung. Dazu sind in dem Block 414 drei Statorsollstromkennlinien 418 hinterlegt. Jede dieser drei Statorsollstromkennlinie gibt einen Sollstromwert in Abhängigkeit der abzugebenden Sollleistung $P_{set}$ aus, nämlich $I_e$ bzw. $V_e$, $I_{qs1}$, $I_{qs1}$, $I_{qs2}$, $I_{ds1}$, $I_{ds2}$. Diese werden anschließend, wie in der Figur 4 gezeigt, aber nicht in der Figur 4a und 4b gezeigt, in $i_a$, $i_b$, $i_c$ und $i_x$, $i_y$, $i_z$ umgeformt und dem Umrichter 304 als Sollströme vorgegeben. Somit gibt die Statorsollstromkennlinie jeweils einen Zusammenhang zwischen der abzugebenden Sollleistung und dem jeweiligen zu bestimmenden Statorsollstrom an.

In einer weiteren Ausführungsform der Figur 4a, die mit drei gestrichelten Update-Pfeilen 419 und dem Block 420 veranschaulicht ist, werden die Statorsollstromkennlinien 418 in einer wiederkehrenden Routine an geänderte Bedingungen adaptiert. Hierzu kann eine wiederkehrende Routine in der adaptiven Steuerung 414, nämlich in Block 420, ausgeführt werden, mit der die Statorsollstromkennlinien 418 angepasst werden. Die Anpassung ist dabei über die drei Update-Pfeile 419 veranschaulicht. Dabei berücksichtigt die wiederkehrende Routine 420 geänderte Bedingungen in Form der geschätzten Größen, nämlich als die geschätzten Magnetisierungsinduktivitäten ($\hat{L}_{md}$, $\hat{L}_{mq}$), einen geschätzten Statorwiderstand ($\hat{R}_{stator}$) und einen geschätzten Erregerwiderstand ($\hat{R}_{err}$). Diese Schätzgrößen werden vom Beobachterblock 412 bzw. vom Adaptionsblock 413 bereitgestellt, wobei in dem Adaptionsblock 413 die Induktivitätskennlinie hinterlegt ist. Die Anpassung der Statorsollstromkennlinien 418 erfolgt dabei langsamer als das Bestimmen der Statorsollströme aus den Statorsollstromkennlinien, insbesondere da sich $\hat{L}_{md}$, $\hat{L}_{mq}$, $\hat{R}_{stator}$ und $\hat{R}_{err}$ im Betrieb entsprechend langsam ändern.

Figur 4b zeigt in einer alternativen Ausführungsform zur Figur 4a eine Bestimmung der Statorsollströme im Optimierungsblock 414, nämlich mittels einer online Bestimmung bzw. Berechnung. Dazu werden Statorsollströme ($I_e$, $I_{qs1}$, $I_{qs2}$, $I_{ds1}$, $I_{ds2}$) online bestimmt in Abhängigkeit der Sollleistung ($P_{set}$) und wenigstens in Abhängigkeit einer, mehrerer oder aller Größen $\hat{L}_{md}$, $\hat{L}_{mq}$, $\hat{R}_{stator}$ und $\hat{R}_{err}$. Online bedeutet hier, dass die Berechnung im laufenden Betrieb der Windenergieanlage erfolgen kann. Dazu ist in dem Block 414 ein Berechnungsalgorithmus 422 hinterlegt, der aus den genannten Schätzgrößen die Statorsollströme berechnet. Ein solcher Algorithmus kann in der Adaptiven Steuerung hinterlegt sein, beispielsweise in Form von Berechnungsvorschriften, und/oder auf einem Prozessrechner ausgeführt werden. Die genannten Schätzgrößen werden dabei analog zur Figur 4a von dem Beobachterblock 412 bzw. vom dem Adaptionsblock 413 bereitgestellt.

Für die Induktivitäten, nämlich besonders $L_{md}$ und $L_{mq}$, werden Werte aus einer oder mehreren Tabellen verwendet, die auch als "Lookup-Tabellen" bezeichnet werden können. Diese eine oder mehreren Tabellen werden in Abhängigkeit des Magnetisierungsstroms $i_m$ während des Generatorbetriebs aktualisiert, und zwar immer dann für jeweils einen Arbeitspunkt, wenn ein eingeschwungener Betriebszustand vorliegt. Im eingeschwungenen Zustand beschreiben Gleichungen (11) und (12) die $d$- und $q$-Komponenten der Statorspannung und deshalb können die Induktivitäten $L_{md}$ und $L_{mq}$ durch Gleichungen (17) und (18) geschätzt werden, und dann die Werte aktualisiert werden.

Um sowohl Modellierungsungenauigkeiten als auch nicht berücksichtigte Verluste zu kompensieren, ändert ein PI-Regler den Leistungssollwert der Regelung. Dieser PI-Regler ist nur in der Nähe der Leistungssollwerte aktiv und dient als Basis für die Stromsollwertgenerierung, bis die gewünschte Abgabeleistung erreicht wird. Bei großen Abweichungen vom Sollwert kann der I-Anteil deaktiviert werden. Wegen einer eher großen Zeitkonstante des Generators werden die Sollwerte mit einer geringen Frequenz berechnet, die bspw. 100 Hz betragen kann, was im Vergleich zu einer maximalen Taktfrequenz üblicher Mikrocontroller von 10 KHz ein vergleichsweise geringer Wert ist.

Es wird somit eine Regelung eines aktiven Gleichrichters für eine fremderregte Synchronmaschine mit optimiertem Maschinenwirkungsgrad vorgeschlagen. Die fremderregte Synchronmaschine kann auch als fremderregter Synchrongenerator bezeichnet werden. Es wurde besonders eine Regelung beschrieben für eine Synchronmaschine mit zwei Generatorsystemen. Das Verfahren kann aber auch für eine abweichende Anzahl von Generatorsystemen bzw. Statorsystemen angepasst werden, nämlich neben zwei dreiphasigen Systemen kommen auch vier oder mehr Statorsysteme in Betracht.

Zweck der Erfindung ist es besonders, eine fremderregte Synchronmaschine mit mehreren Generatorsystemen bzw. Statorsystemen und stark sättigungsabhängigen Parametern mit einem aktiven Gleichrichter im Wirkungsgrad optimiert zu betreiben. Die Sättigungscharakteristik der Maschine, bzw. die Abschätzung des korrekten Verhaltens der Magnetisierungsinduktivität, kann mit der beschriebenen Lösung erreicht werden und für ein Regelverfahren für aktive Gleichrichter eingesetzt werden und dadurch kann auch die Sättigungscharakteristik der Maschine berücksichtigt werden. Außerdem ist die vorgestellte Lösung für fremderregte Synchronmaschinen geeignet.

Die Literaturstelle [a] zeigt dabei ein Verfahren für die Regelung einer fremderregten Synchronmaschine. Stromsollwerte werden analytisch berechnet durch das "Lagrange Multiplier"-Verfahren, um die gesamten Stator und Rotor-Verluste zu minimieren. Ein Self-Tuning-Algorithmus ist dargestellt, der einige Parameter für die analytische Berechnung im Betrieb ändern kann, unter der Annahme, dass die Maschine sich im eingeschwungenen Zustand befindet. Allerdings werden nur die $i_d$-Komponente des Statorstroms und der Erregerstrom $i_{err}$ angepasst.

In Bezug auf die Parameterabschätzung werden oft Verfahren vorgeschlagen, die auf RLS (Recursive Least Square) Methoden basieren o. ä. und die Annahme des eingeschwungenen Zustands ist dafür nötig, um die Ableitung der Flüsse zu vernachlässigen. Zur Verbesserung basiert in der vorgeschlagenen Lösung die Abschätzung der Induktivitäten $L_{md}$ und $L_{mq}$ auf einem Verfahren, in dem die entsprechenden Parameter einfach durch algebraische Gleichungen berechnet werden.

Die Erfindung kann, zumindest in einigen Ausführungsformen, für die Regelung einer fremderregten Synchronmaschine mit mehreren Generatorsystemen verwendet werden. Unter der Annahme, dass die Parameter der Maschine den tatsächlichen Eigenschaften der Maschine entsprechen, kann der Algorithmus den jeweils global optimalen Arbeitspunkt berechnen, um die Stator- und Rotor-Verluste für eine bestimmte Sollwertleistung zu minimieren. Das Verfahren bietet die Möglichkeit, die Lookup-Tabellen der Induktivitäten durch eine Online-Parameterschätzung zu korrigieren, die durch eine algebraische Auswertung der gemessenen Generatorgrößen, nämlich der Spannungen, der Ströme und der Drehzahl, durchgeführt werden kann.

Da die Arbeitspunkte durch eine numerische iterative Berechnung bestimmt werden, ist eine entsprechende Rechenleistung erforderlich. Das Problem wurde erkannt und die Berechnung kann aufgrund der großen mechanischen Trägheit der Maschine und der großen Zeitkonstante des Rotors mit einer im Vergleich zur Taktfrequenz von modernen Mikrocontrollern niedrigen Frequenz durchgeführt werden.

## Patentansprüche

1. Verfahren zum Steuern eines mehrphasigen fremderregten Synchrongenerators (302) einer Windenergieanlage (100), wobei

   - der Synchrongenerator (302) einen Stator (322) und einen Läufer (324) aufweist,
   - der Läufer (324) einen Erregereingang (326) aufweist um einen Erregerstrom ($i_{err}$) oder eine Erregerspannung ($v_{err}$) einzugeben,
   - an dem Erregereingang (326) ein Erregersteller (320) angeschlossen ist zum Eingeben des Erregerstroms ($i_{err}$) bzw. der Erregerspannung ($v_{err}$),
   - der Stator (322) einen Statorausgang (328) aufweist um Statorströme abzugeben,
   - an den Statorausgang (328) des Stators (322) ein Gleichrichter (304) angeschlossen ist, um die Statorströme gleichzurichten und auf einen mit dem Gleichrichter (304) verbundenen Gleichspannungszwischenkreis (306) zu geben, und
   - der Gleichrichter (304) steuerbar ist, um die Statorströme zu steuern, umfassend die Schritte:
   - Erfassen einer Drehzahl (n) des Läufers (324) oder aerodynamischen Rotors der Windenergieanlage (100),
   - Bestimmen einer von dem Synchrongenerator (302) oder der Windenergieanlage abzugebenden Sollleistung ($P_{soll}$) in Abhängigkeit der erfassten Drehzahl (n),
   - Bestimmen eines Erregerstroms ($i_{err}$) oder einer Erregerspannung ($v_{err}$) in Abhängigkeit der erfassten Drehzahl (n) und der bestimmten Sollleistung ($P_{soll}$),
   - Eingeben des so bestimmten Erregerstroms ($i_{err}$) bzw. der so bestimmten Erregerspannung ($v_{err}$) mittels des Erregerstellers (330) an dem Erregereingang (326),
   - Bestimmen der abzugebenden Statorströme als Statorsollströme in Abhängigkeit der erfassten Drehzahl (n) und der bestimmten Sollleistung ($P_{soll}$) und
   - Steuern des Gleichrichters (304) um die bestimmten an dem Statorausgang (328) abzugebenden Statorströme auf die Statorsollströme einzustellen, wobei wenigstens einer der Schritte
   - Bestimmen des Erregerstroms ($i_{err}$) bzw. der Erregerspannung ($v_{err}$) und
   - Bestimmen der abzugebenden Statorströme als Statorsollströme mittels einer adaptiven Steuerungseinrichtung (314) erfolgt, wobei der Erregerstrom ($i_{err}$) bzw. die Erregerspannung ($v_{err}$) bzw. die abzugebenden Statorströme Steuergrößen der Steuerungseinrichtung (314) bilden, **dadurch gekennzeichnet, daß**
   - Parameter des Synchrongenerators, nämlich Magnetisierungsinduktivitäten ($L_{md}$, $L_{mq}$) und/oder ein Statorwiderstand und/oder ein Erregerwiderstand, mittels einer Schätzeinrichtung (312) als Schätzgrößen des Synchrongenerators geschätzt werden und
   - die adaptive Steuerungseinrichtung zum Bestimmen ihrer Steuergrößen die Schätzgrößen berücksichtigt.

2. Verfahren nach Anspruch 1,
   **dadurch gekennzeichnet, dass**
   die adaptive Steuerungseinrichtung zum Bestimmen ihrer Steuergrößen ein Modell des Synchrongenerators berücksichtigt und das Modell oder davon abgeleitete Zusammenhänge in Abhängigkeit geschätzter Größen des Synchrongenerators bzw. der Schätzgrößen des Synchrongenerators adaptiert.

3. Verfahren nach einem der vorstehenden Ansprüche,
   **dadurch gekennzeichnet, dass**

- die Windenergieanlage als getriebelose Windenergieanlage ausgebildet ist und
- außerdem oder alternativ der Synchrongenerator als Ringgenerator ausgebildet ist und
- außerdem oder alternativ wenigstens zwei dreiphasige Systeme im Stator vorhanden sind.

4. Verfahren nach einem der vorstehenden Ansprüche,
   **dadurch gekennzeichnet, dass**
   wenigstens eine Induktivität des Synchrongenerators in einem Bereich einer Sättigung betrieben wird und wenigstens ein bedingt durch diese Sättigung geänderter Parameter von einer bzw. der Schätzeinrichtung erfasst wird.

5. Verfahren nach einem der vorstehenden Ansprüche,
   **dadurch gekennzeichnet, dass**
   eine bzw. die Schätzeinrichtung zum Schätzen von Parametern des Synchrongenerators

   - wenigstens eine Statorspannung, insbesondere drei Statorspannungen eines von mehreren dreiphasigen Statorsystemen und außerdem oder alternativ
   - wenigstens einen Statorstrom insbesondere drei Statorströme desselben dreiphasigen Statorsystems bzw. eines von mehreren dreiphasigen Statorsystemen als Eingangsgröße zum Schätzen der Parameter berücksichtigt.

6. Verfahren nach einem der vorstehenden Ansprüche,
   **dadurch gekennzeichnet, dass**
   eine bzw. die Schätzeinrichtung d/q-Komponenten einer Magnetisierungsinduktivität des Synchrongenerators als Schätzgrößen schätzt.

7. Verfahren nach einem der vorstehenden Ansprüche,
   **dadurch gekennzeichnet, dass**

   - die adaptive Steuereinrichtung die Statorsollströme in d/q-Koordinaten bestimmt und
   - die Statorsollströme zum Steuern des Gleichrichters, um die bestimmten abzugebenden Statorströme auf die Statorsollströme einzustellen, in eine dreiphasige Darstellung mit einem Stromwert pro Phase zurück transformiert werden.

8. Verfahren nach einem der vorstehenden Ansprüche,
   **dadurch gekennzeichnet, dass**
   der Gleichspannungszwischenkreis mit einem Wechselrichter verbunden ist und der Wechselrichter Energie des Gleichspannungszwischenkreises in einen dreiphasigen Strom zum Einspeisen in ein elektrisches Versorgungsnetz wandelt.

9. Verfahren nach einem der vorstehenden Ansprüche,
   **dadurch gekennzeichnet, dass**
   die Sollleistung in Abhängigkeit der erfassten Drehzahl und in Abhängigkeit einer erfassten Abgabeleistung des Generators bzw. der Windenergieanlage bestimmt wird, insbesondere so, dass

   - aus der erfassten Drehzahl eine Zwischenleistung bestimmt wird,
   - aus der Zwischenleistung als Sollwert und der erfassten Abgabeleistung als Istwert über einen Sollistwertvergleich eine Regelabweichung bestimmt wird und
   - die Regelabweichung auf einen Regler, insbesondere einen PI-Regler gegeben wird, um dadurch die Sollleistung zu bestimmen.

10. Verfahren nach einem der vorstehenden Ansprüche,
    **dadurch gekennzeichnet, dass**

    - zum Schätzen oder Bestimmen wenigstens einer Magnetisierungsinduktivität jeweils eine Induktivitätskennlinie verwendet wird, wobei die Induktivitätskennlinie Werte der jeweiligen Magnetisierungsinduktivität in Abhängigkeit eines Magnetisierungsstroms vorgibt, wobei
    - Werte der Induktivitätskennlinie ausgehend von einer Anfangskennlinie nach und nach im laufenden Verfahren mittels einer bzw. der Schätzung adaptiert werden.

**11.** Verfahren nach einem der vorstehenden Ansprüche,
**dadurch gekennzeichnet, dass**
zum Bestimmen der Statorsollströme ($I_e$, $I_{qs1}$, $I_{qs2}$, $I_{ds1}$, $I_{ds2}$)

- jeweils eine Statorsollstromkennlinie für jeweils einen der Statorsollströme verwendet wird, wobei
- die Statorsollstromkennlinie jeweils einen Zusammenhang zwischen der abzugebenden Sollleistung und dem jeweiligen zu bestimmenden Statorsollstrom angibt, und
- jeweils einer der Statorsollströme in Abhängigkeit der abzugebenden Sollleistung gemäß der jeweiligen Statorsollstromkennlinie bestimmt wird.

**12.** Verfahren nach Anspruch 11,
**dadurch gekennzeichnet, dass**

- wenigstens eine der Statorstromkennlinien, insbesondere jede der Statorstromkennlinien, in einer wiederkehrenden Routine an geänderte Bedingungen adaptiert wird, wobei
- die wenigstens eine Statorstromkennlinie in Abhängigkeit einer, mehrerer oder aller Größen adaptiert wird aus der Liste aufweisend,

- geschätzte Magnetisierungsinduktivitäten ($\hat{L}_{md}$, $\hat{L}_{mq}$),
- einen geschätzten Statorwiderstand ($\hat{R}_{stator}$) und
- einen geschätzten Erregerwiderstand ($\hat{R}_{err}$), und wobei

- die wiederkehrende Routine seltener durchlaufen wird als jeweils einer der Statorsollströme in Abhängigkeit der abzugebenden Sollleistung gemäß der jeweiligen Statorsollstromkennlinie bestimmt wird, insbesondere dass die wiederkehrende Routine mit einer Frequenz in einem Bereich von 0,01Hz bis 10Hz wiederholt wird.

**13.** Verfahren nach einem der Ansprüche 1 bis 9,
**dadurch gekennzeichnet, dass**

- die Statorsollströme ($I_e$, $I_{qs1}$, $I_{qs2}$, $I_{ds1}$, $I_{ds2}$) online in Abhängigkeit der Sollleistung ($P_{set}$) bestimmt werden, und wenigstens in Abhängigkeit einer, mehrerer oder aller Größen der Liste aufweisend:

- geschätzte Magnetisierungsinduktivitäten ($\hat{L}_{md}$, $\hat{L}_{mq}$),
- einen geschätzten Statorwiderstand ($\hat{R}_{stator}$) und
- einen geschätzten Erregerwiderstand ($\hat{R}_{err}$).

**14.** Windenergieanlage mit einem mehrphasigen fremderregten Synchrongenerator, wobei

- der Synchrongenerator einen Stator und einen Läufer aufweist,
- der Läufer einen Erregereingang aufweist um einen Erregerstrom oder eine Erregerspannung einzugeben,
- an dem Erregereingang ein Erregersteller angeschlossen ist zum Eingeben des Erregerstroms bzw. der Erregerspannung,
- der Stator einen Statorausgang aufweist um Statorströme abzugeben,
- an den Ausgang des Stators ein Gleichrichter angeschlossen ist, um die Statorströme gleichzurichten und auf einen mit dem Gleichrichter verbundenen Gleichspannungszwischenkreis zu geben, und
- der Gleichrichter steuerbarer ist, um die Statorströme zu steuern, wobei zum Steuern des Synchrongenerators
- eine Drehzahlerfassung zum Erfassen einer Drehzahl des Läufers oder aerodynamischen Rotors vorgesehen ist, und
- eine Steuerungseinrichtung vorgesehen ist und vorbereitet ist,

- zum Bestimmen einer von dem Synchrongenerator oder der Windenergie abzugeben Sollleistung in Abhängigkeit der erfassten Drehzahl, und
- zum Bestimmen eines Erregerstroms oder einer Erregerspannung in Abhängigkeit der erfassten Drehzahl und der bestimmten Sollleistung,

- der Erregersteller vorbereitet ist zum Eingeben des so bestimmten Erregerstroms bzw. der so bestimmten Erregerspannung an dem Erregereingang,
- die Steuerungseinrichtung vorbereitet ist

- zum Bestimmen der abzugebenden Statorströme als Statorsollströme in Abhängigkeit der erfassten Drehzahl und der bestimmten Sollleistung und
- zum Steuern des Gleichrichters, um die bestimmten an dem Statorausgang abzugebenden Statorströme auf die Statorsollströme einzustellen, wobei für wenigstens einen der Schritte
- Bestimmen des Erregerstroms bzw. der Erregerspannung und
- Bestimmen der abzugebenden Statorströme als Statorsollströme
- die Steuerungseinrichtung als adaptive Steuerungseinrichtung vorgesehen ist, wobei die Steuerungseinrichtung so ausgestaltet ist, dass der Erregerstrom bzw. die Erregerspannung bzw. die abzugebenden Statorströme Steuergrößen der Steuerungseinrichtung bilden und
- die Windenergieanlage **dadurch gekennzeichnet ist, daß** sie eine Schätzeinrichtung aufweist, die dazu eingerichtet ist, Parameter des Synchrongenerators, nämlich Magnetisierungsinduktivitäten ($L_{md}$, $L_{mq}$) und/oder ein Statorwiderstand und/oder ein Erregerwiderstand als Schätzgrößen des Synchrongenerators zu schätzen und
- die adaptive Steuerungseinrichtung zum Bestimmen ihrer Steuergrö-ßen die Schätzgrößen berücksichtigt.

**15.** Windenergieanlage nach Anspruch 14,
**dadurch gekennzeichnet, dass**
die Windenergieanlage, insbesondere mittels der Steuereinrichtung, dazu vorbereitet ist, ein Verfahren gemäß einem der Ansprüche 1 bis 13 auszuführen.

**Claims**

**1.** A method for controlling a multiphase separately excited synchronous generator (302) in a wind turbine (100), wherein

- the synchronous generator (302) has a stator (322) and an armature (324),
- the armature (324) has an excitation input (326) for inputting an excitation current ($i_{err}$) or an excitation voltage ($v_{err}$),
- the excitation input (326) has an excitation controller (320) connected to it for inputting the excitation current ($i_{err}$) or the excitation voltage ($v_{err}$),
- the stator (322) has a stator output (328) for delivering stator currents,
- the stator output (328) of the stator (322) has a rectifier (304) connected to it for rectifying the stator currents and for providing said currents to a DC link (306) connected to the rectifier (304), and
- the rectifier (304) is controllable in order to control the stator currents, comprising the steps of:
- detecting a speed (n) of the armature (324) or aerodynamic rotor of the wind turbine (100),
- determining a setpoint power ($P_{Soll}$), to be delivered by the synchronous generator (302) or the wind turbine, on the basis of the detected speed (n),
- determining an excitation current ($i_{err}$) or an excitation voltage ($v_{err}$) on the basis of the detected speed (n) and the determined setpoint power ($P_{Soll}$),
- inputting the thus determined excitation current ($i_{err}$) or the thus determined excitation voltage ($v_{err}$) by means of the excitation controller (330) at the excitation input (326),
- determining the stator currents to be delivered as setpoint stator currents on the basis of the detected speed (n) and the determined setpoint power ($P_{Soll}$) and
- controlling the rectifier (304) in order to set the determined stator currents to be delivered at the stator output (328) to the setpoint stator currents, wherein at least one of the steps of
- determining the excitation current ($i_{err}$) or the excitation voltage ($v_{err}$) and
- determining the stator currents to be delivered as setpoint stator currents
is effected by means of an adaptive control device (314), wherein the excitation current ($i_{err}$) or the excitation voltage ($v_{err}$) or the stator currents to be delivered form control variables for the control device (314), **characterized in that**
- parameters of the synchronous generator, namely magnetization inductances ($L_{md}$, $L_{mq}$) and/or a stator resistance and/or an excitation resistance, are estimated as estimate quantities for the synchronous generator by means of an estimating device (312), and
- the adaptive control device determines its control variables by taking into consideration the estimate quantities.

**2.** The method as claimed in claim 1,
**characterized in that**
the adaptive control device determines its control variables by taking into consideration a model of the synchronous generator and adapting the model or relationships derived therefrom on the basis of estimated quantities for the synchronous generator or the estimate quantities for the synchronous generator.

3. The method as claimed in one of the preceding claims, **characterized in that**

   - the wind turbine is in the form of a gearless wind turbine and,
   - additionally or alternatively, the synchronous generator is in the form of a ring generator and,
   - additionally or alternatively, at least two three-phase systems are present in the stator.

4. The method as claimed in one of the preceding claims, **characterized in that** at least one inductance of the synchronous generator is operated in a range of saturation and at least one parameter changed owing to this saturation is detected by a or the estimating device.

5. The method as claimed in one of the preceding claims, **characterized in that** a or the estimating device estimates parameters of the synchronous generator by taking into consideration

   - at least one stator voltage, in particular three stator voltages, of one or more three-phase stator systems and, additionally or alternatively,
   - at least one stator current, in particular three stator currents, of the same three-phase stator system or of one of multiple three-phase stator systems as an input quantity for estimating the parameters.

6. The method as claimed in one of the preceding claims, **characterized in that** a or the estimating device estimates d/q components of a magnetization inductance of the synchronous generator as estimate quantities.

7. The method as claimed in one of the preceding claims, **characterized in that**

   - the adaptive control device determines the setpoint stator currents in d/q coordinates and
   - the setpoint stator currents are transformed back into a three-phase representation with one current value per phase to control the rectifier in order to set the determined stator currents to be delivered to the setpoint stator currents.

8. The method as claimed in one of the preceding claims, **characterized in that** the DC link is connected to an inverter and the inverter converts energy of the DC link into a three-phase current for supply to an electrical supply system.

9. The method as claimed in one of the preceding claims, **characterized in that** the setpoint power is determined on the basis of the detected speed and on the basis of a detected power output of the generator or of the wind turbine, in particular such that

   - an intermediate power is determined from the detected speed,
   - a control error is determined from the intermediate power as setpoint value and the detected power output as actual value by means of a setpoint/actual value comparison, and
   - the control error is provided to a controller, in particular a PI controller, so as thereby to determine the setpoint power.

10. The method as claimed in one of the preceding claims, **characterized in that**

    - at least one magnetization inductance is estimated or determined by using a respective inductance characteristic curve, wherein the inductance characteristic curve prescribes values of the respective magnetization

EP 3 676 953 B1

inductance on the basis of a magnetization current, wherein
- values of the inductance characteristic curve are adapted from an initial characteristic curve little by little in the ongoing method by means of a or the estimation.

11. The method as claimed in one of the preceding claims,
**characterized in that**
to determine the setpoint stator currents ($I_e$, $I_{qs1}$, $I_{qs2}$, $I_{ds1}$, $I_{ds2}$)

- a respective setpoint stator current characteristic curve is used for a respective one of the setpoint stator currents, wherein
- the setpoint stator current characteristic curve indicates a respective relationship between the setpoint power to be delivered and the respective setpoint stator current to be determined, and
- a respective one of the setpoint stator currents is determined in accordance with the respective setpoint stator current characteristic curve on the basis of the setpoint power to be delivered.

12. The method as claimed in claim 11,
**characterized in that**

- at least one of the stator current characteristic curves, in particular each of the stator current characteristic curves, is adapted to changed conditions in a recurring routine, wherein
- the at least one stator current characteristic curve is adapted on the basis of one, multiple or all quantities from the list comprising

- estimated magnetization inductances ($\hat{L}_{md}$, $\hat{L}_{mq}$),
- an estimated stator resistance ($\hat{R}_{stator}$) and
- an estimated excitation resistance ($\hat{R}_{err}$), and wherein

- the recurring routine is performed less often than a respective one of the setpoint stator currents is determined in accordance with the respective setpoint stator current characteristic curve on the basis of the setpoint power to be delivered, in particular **in that** the recurring routine is repeated at a frequency in a range from 0.01 Hz to 10 Hz.

13. The method as claimed in one of claims 1 to 9,
**characterized in that**

- the setpoint stator currents ($I_e$, $I_{qs1}$, $I_{qs2}$, $I_{ds1}$, $I_{ds2}$) are determined online on the basis of the setpoint power ($P_{set}$), and at least on the basis of one, multiple or all quantities from a list comprising:

- estimated magnetization inductances ($\hat{L}_{md}$, $\hat{L}_{mq}$),
- an estimated stator resistance ($\hat{R}_{stator}$) and
- an estimated excitation resistance ($\hat{R}_{err}$).

14. A wind turbine having a multiphase separately excited synchronous generator, wherein

- the synchronous generator has a stator and an armature,
- the armature has an excitation input for inputting an excitation current or an excitation voltage,
- the excitation input has an excitation controller connected to it for inputting the excitation current or the excitation voltage,
- the stator has a stator output for delivering stator currents,
- the output of the stator has a rectifier connected to it for rectifying the stator currents and for providing said currents to a DC link connected to the rectifier, and
- the rectifier is controllable in order to control the stator currents, wherein the synchronous generator is controlled by virtue of
- there being provision for speed detection for detecting a speed of the armature or aerodynamic rotor, and
- there being provision for a control device, which is prepared

- to determine a setpoint power, to be delivered by the synchronous generator or the wind energy, on the basis of the detected speed, and

- to determine an excitation current or an excitation voltage on the basis of the detected speed and the determined setpoint power,
- the excitation controller is prepared to input the thus determined excitation current or the thus determined excitation voltage at the excitation input,
- the control device is prepared

  - to determine the stator currents to be delivered as setpoint stator currents on the basis of the detected speed and the determined setpoint power and
  - to control the rectifier in order to set the determined stator currents to be delivered at the stator output to the setpoint stator currents, wherein for at least one of the steps of
  - determining the excitation current or the excitation voltage and
  - determining the stator currents to be delivered as setpoint stator currents,
  - the control device is provided as an adaptive control device, wherein the control device is configured so that the excitation current or the excitation voltage or the stator currents to be delivered form control variables for the control device, and

  - the wind turbine is **characterized in that** it provides an estimation device adapted to estimate parameters of the synchronous generator, namely magnetization inductances ($L_{md}$, $L_{mq}$) and/or a stator resistance and/or an excitation resistance, as estimate quantities for the synchronous generator, and
  - the adaptive control device for determining its control variables takes into consideration the estimate quantities.

**15.** The wind turbine as claimed in claim 14,
**characterized in that**
the wind turbine, in particular by the control device, is prepared to carry out a method as claimed in one of claims 1 to 13.


**Revendications**

**1.** Procédé pour commander un générateur synchrone (302) polyphasé à excitation séparée d'une éolienne (100), dans lequel

  - le générateur synchrone (302) présente un stator (322) et un induit (324),
  - l'induit (324) présente une entrée d'excitateur (326) pour injecter un courant d'excitation ($i_{err}$) ou une tension d'excitation ($v_{err}$),
  - un système de réglage d'excitation (320) est raccordé à l'entrée d'excitateur (326) pour injecter le courant d'excitation ($i_{err}$) ou la tension d'excitation ($v_{err}$),
  - le stator (322) présente une sortie de stator (328) pour délivrer des courants de stator,
  - un redresseur (304) est raccordé à la sortie de stator (328) du stator (322) pour redresser les courants de stator et pour les transférer sur un circuit intermédiaire de tension continue (306) relié au redresseur (304), et
  - le redresseur (304) peut être commandé pour commander les courants de stator, comprenant les étapes :
  - de détection d'une vitesse de rotation (n) de l'induit (324) ou du rotor aérodynamique de l'éolienne (100),
  - de définition d'une puissance de consigne ($P_{soll}$) à délivrer par le générateur synchrone (302) ou par l'éolienne en fonction de la vitesse de rotation (n) détectée,
  - de définition d'un courant d'excitation ($i_{err}$) ou d'une tension d'excitation ($v_{err}$) en fonction de la vitesse de rotation (n) détectée et de la puissance de consigne ($P_{soll}$) définie,
  - d'injection du courant d'excitation ($i_{err}$) ainsi défini ou de la tension d'excitation ($v_{err}$) ainsi définie au moyen du système de réglage d'excitation (330) sur l'entrée d'excitateur (326),
  - de définition des courants de stator à délivrer en tant que courants de consigne de stator en fonction de la vitesse de rotation (n) détectée et de la puissance de consigne ($P_{soll}$) définie et
  - de commande du redresseur (304) pour régler les courants de stator définis à délivrer sur la sortie de stator (328) sur les courants de consigne de stator, dans lequel au moins une des étapes
  - de définition du courant d'excitation ($i_{err}$) ou de la tension d'excitation ($v_{err}$) et
  - de définition des courants de stator à délivrer en tant que courants de consigne de stator

  est effectuée au moyen d'un dispositif de commande adaptatif (314), dans lequel le courant d'excitation ($i_{err}$) ou la tension d'excitation ($v_{err}$) ou les courants de stator à délivrer constituent des grandeurs de commande du dispositif de commande (314), **caractérisé en ce que**
  - des paramètres du générateur synchrone, à savoir des inductances de magnétisation ($L_{md}$, $L_{mq}$)

et/ou une résistance de stator et/ou une résistance d'excitateur sont estimés en tant que grandeurs d'estimation du générateur synchrone au moyen d'un dispositif d'estimation (312) et
- le dispositif de commande adaptatif tient compte des grandeurs d'estimation pour définir ses grandeurs de commande.

2. Procédé selon la revendication 1,
**caractérisé en ce que**
le dispositif de commande adaptatif tient compte d'un modèle du générateur synchrone pour définir ses grandeurs de commande et adapte le modèle ou des liens qui en sont déduits en fonction de grandeurs estimées du générateur synchrone ou des grandeurs d'estimation du générateur synchrone.

3. Procédé selon l'une quelconque des revendications précédentes,
**caractérisé en ce que**

- l'éolienne est réalisée en tant qu'éolienne sans transmission
et
- par ailleurs ou en variante le générateur synchrone est réalisé en tant que générateur annulaire, et
- par ailleurs ou en variante au moins deux systèmes triphasés sont présents dans le stator.

4. Procédé selon l'une quelconque des revendications précédentes,
**caractérisé en ce que**
au moins une inductance du générateur synchrone fonctionne dans une zone de saturation et au moins un paramètre modifié en raison de cette saturation est détecté par un ou le dispositif d'estimation.

5. Procédé selon l'une quelconque des revendications précédentes,
**caractérisé en ce que**
un ou le dispositif d'estimation tient compte pour estimer des paramètres du générateur synchrone

- d'au moins une tension de stator, en particulier de trois tensions de stator d'un parmi plusieurs systèmes de stator triphasés et par ailleurs ou en variante
- d'au moins un courant de stator, en particulier de trois courants de stator du même système de stator triphasé ou d'un parmi plusieurs systèmes de stator triphasés en tant que grandeur d'entrée pour estimer les paramètres.

6. Procédé selon l'une quelconque des revendications précédentes,
**caractérisé en ce que**
un ou le dispositif d'estimation estime des composants d/q d'une inductance de magnétisation du générateur synchrone en tant que grandeurs d'estimation.

7. Procédé selon l'une quelconque des revendications précédentes,
**caractérisé en ce que**

- le dispositif de commande adaptatif définit les courants de consigne de stator dans des coordonnées d/q, et
- les courants de consigne de stator pour commander le redresseur pour régler les courants de stator définis à délivrer sur les courants de consigne de stator sont retransformés en une représentation triphasée avec une valeur de courant par phase.

8. Procédé selon l'une quelconque des revendications précédentes,
**caractérisé en ce que**
le circuit intermédiaire de tension continue est relié à un onduleur et l'onduleur convertit de l'énergie du circuit intermédiaire de tension continue en un courant triphasé destiné à être injecté dans un réseau d'alimentation électrique.

9. Procédé selon l'une quelconque des revendications précédentes,
**caractérisé en ce que**
la puissance de consigne est définie en fonction de la vitesse de rotation détectée et en fonction d'une puissance délivrée détectée du générateur ou de l'éolienne, en particulier de telle sorte que

- une puissance intermédiaire est définie à partir de la vitesse de rotation détectée,

- un écart de régulation est défini à partir de la puissance intermédiaire en tant que valeur de consigne et de la puissance délivrée détectée en tant que valeur réelle par l'intermédiaire d'une comparaison de valeur de consigne/de valeur réelle
et
- l'écart de régulation est transféré sur un régulateur, en particulier un régulateur PI, pour définir ainsi la puissance de consigne.

**10.** Procédé selon l'une quelconque des revendications précédentes, **caractérisé en ce que**

- respectivement une courbe caractéristique d'inductance est utilisée pour estimer ou définir au moins une inductance de magnétisation, dans lequel la courbe caractéristique d'inductance spécifie des valeurs de l'inductance de magnétisation respective en fonction d'un courant de magnétisation, dans lequel
- des valeurs de la courbe caractéristique d'inductance sont adaptées en partant d'une courbe caractéristique de départ peu à peu lors du procédé en cours de réalisation au moyen d'une ou de l'estimation.

**11.** Procédé selon l'une quelconque des revendications précédentes, **caractérisé en ce que**
pour définir les courants de consigne de stator ($I_e$, $I_{qs1}$, $I_{qs2}$, $I_{ds1}$, $I_{ds2}$)

- respectivement une courbe caractéristique de courant de consigne de stator est utilisée pour respectivement un des courants de consigne de stator, dans lequel
- la courbe caractéristique de courant de consigne de stator indique respectivement un lien entre la puissance de consigne à délivrer et le courant de consigne de stator respectif à définir, et
- respectivement un des courants de consigne de stator est défini en fonction de la puissance de consigne à délivrer selon la courbe caractéristique de courant de consigne de stator respective.

**12.** Procédé selon la revendication 11, **caractérisé en ce que**

- au moins une des courbes caractéristiques de courant de stator, en particulier chacune des courbes caractéristiques de courant de stator, est adaptée à des conditions modifiées dans une routine récurrente, dans lequel
- l'au moins une courbe caractéristique de courant de stator est adaptée en fonction d'une, de plusieurs ou de toutes les grandeurs issues de la liste présentant

    - - des inductances de magnétisation estimées ($\hat{L}_{md}$, $\hat{L}_{mq}$),
    - - une résistance de stator estimée ($\hat{R}_{stator}$), et
    - - une résistance d'excitateur estimée ($\hat{R}_{err}$), et dans lequel

- la routine récurrente est exécutée plus rarement que la définition respectivement d'un des courants de consigne de stator en fonction de la puissance de consigne à délivrer selon la courbe caractéristique de courant de consigne de stator respective, en particulier la routine récurrente est répétée avec une fréquence dans une plage de 0,01 Hz à 10 Hz.

**13.** Procédé selon l'une quelconque des revendications 1 à 9, **caractérisé en ce que**

- les courants de consigne de stator ($I_e$, $I_{qs1}$, $I_{qs2}$, $I_{ds1}$, $I_{ds2}$) sont définis en ligne en fonction de la puissance de consigne ($P_{set}$) et au moins en fonction d'une, de plusieurs ou de toutes les grandeurs de la liste présentant :

    - - des inductances de magnétisation estimées ($\hat{L}_{md}$, $\hat{L}_{mq}$),
    - - une résistance de stator estimé ($\hat{R}_{stator}$), et

- une résistance d'excitateur estimé ($\hat{R}_{err}$) estimée.

**14.** Eolienne avec un générateur synchrone polyphasé à excitation séparée, dans laquelle

- le générateur synchrone présente un stator et un induit,
- l'induit présente une entrée d'excitateur pour injecter un courant d'excitation ou une tension d'excitation,

- un système de réglage d'excitation est raccordé à l'entrée d'excitateur pour injecter le courant d'excitation ou la tension d'excitation,

- le stator présente une sortie de stator pour délivrer des courants de stator,

- un redresseur est raccordé à la sortie de stator du stator pour redresser les courants de stator et pour les transférer sur un circuit intermédiaire de tension continue relié au redresseur, et

- le redresseur peut être commandé pour commander les courants de stator, dans lequel pour commander le générateur synchrone,

- une détection de vitesse de rotation est prévue pour détecter une vitesse de rotation de l'induit ou du rotor aérodynamique, et

- un dispositif de commande est prévu et est préparé

- - pour définir une puissance de consigne à délivrer par le générateur synchrone ou par l'éolienne en fonction de la vitesse de rotation détectée, et

- - pour définir un courant d'excitation ou une tension d'excitation en fonction de la vitesse de rotation détectée et de la puissance de consigne définie,

- le système de réglage d'excitation est préparé pour injecter le courant d'excitation ainsi défini ou la tension d'excitation ainsi définie sur l'entrée d'excitateur,

- le dispositif de commande est préparé

- - pour définir les courants de stator à délivrer en tant que courants de consigne de stator en fonction de la vitesse de rotation détectée et de la puissance de consigne définie et

- - pour commander le redresseur pour régler les courants de stator définis à délivrer sur la sortie de stator sur les courants de consigne de stator, pour au moins une des étapes

- - de définition du courant d'excitation ou de la tension d'excitation et

- - de définition des courants de stator à délivrer en tant que courants de consigne de stator,

- - le dispositif de commande est prévu en tant que dispositif de commande adaptatif, dans lequel le dispositif de commande est configuré de telle sorte que le courant d'excitation ou la tension d'excitation ou les courants de stator à délivrer constituent des grandeurs de commande du dispositif de commande et

- - **caractérisée en ce que** l'éolienne présente un dispositif d'estimation, qui est mis au point pour estimer des paramètres du générateur synchrone, à savoir des inductances de magnétisation ($L_{md}$, $L_{mq}$) et/ou une résistance de stator et/ou une résistance d'excitateur en tant que grandeurs d'estimation du générateur synchrone,
et

- - le dispositif de commande adaptatif tient compte pour définir ses grandeurs de commande des grandeurs d'estimation.

15. Eolienne selon la revendication 14,
**caractérisée en ce que**
l'éolienne est préparée en particulier au moyen du dispositif de commande pour exécuter un procédé selon l'une quelconque des revendications 1 à 13.

Fig. 1

$L_{md}$ & $L_{mq}$

Fig. 2

VDC
(DC-Zwischenkreisspannung)

(ia, ib, ic, ix, iy, iz)

Fig. 3

Fig. 3a

Fig. 4

Fig. 4a

Fig. 4b

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010043492 A1
- DE 112016000455 T5
- EP 2672624 A1
- DE 102011006670 A1
- DE 102016106590 A1
- DE 102009014012 A1
- US 2013182466 A1

**In der Beschreibung aufgeführte Nicht-Patentliteratur**

- **CHI D. NGUYEN ; W. HOFFMAN.** Self-Tuning Adaptive Copper-Losses Minimization Control of Externally Excited Synchronous Motors. *International Conference on Electrical Machines (ICEM),* 2014, 897-902
- **D. KOWAL ; P. SERGEANT ; L. DUPRE ; H. KARMAKER.** Comparison of Frequency and Time-Domain Iron and Magnet Loss Modeling Including PWM Harmonics in a PMSG for Wind Energy Application. *IEEE Trans. on Energy Conversion,* Juni 2015, vol. 30 (2), 476-486